Europäisches Patentamt

European Patent Office

Office européen des brevets

(11) Veröffentlichungsnummer: **0 514 838 A2**

# EUROPÄISCHE PATENTANMELDUNG

(21) Anmeldenummer: **92108438.0**

(51) Int. Cl.⁵: **F16K 11/06**

(22) Anmeldetag: **19.05.92**

(30) Priorität: **22.05.91 DE 4116705**

(43) Veröffentlichungstag der Anmeldung:
**25.11.92 Patentblatt 92/48**

(84) Benannte Vertragsstaaten:
**AT CH DE FR GB IT LI NL SE**

(71) Anmelder: **KNORR-BREMSE AG**
**Moosacher Strasse 80 Postfach 401060**
**W-8000 München 40(DE)**

(72) Erfinder: **Deichl, Klaus**
**Augustenfeldstrasse 27**
**W-8060 Dauchau(DE)**
Erfinder: **Funk, Jürgen**
**Engadiner Strasse 6/I**
**W-8000 München 71(DE)**
Erfinder: **Nüssler, Wolfgang**
**Dobmannstrasse 12**
**W-8000 München 50(DE)**
Erfinder: **Teltscher, Rainer**
**Auerweg 8**
**W-8176 Marienstein(DE)**

(54) **Schieberventil.**

(57) Das Schieberventil weist ein zum Gehäuse (140) festes Schieberbahnteil (141) mit einer Schieberbahn (142) auf, gegen welche ein Schieber (143) mit seiner Schiebefläche (144) beweglich ist. Die Schieberbahn (142) und die Schieberfläche (144) sind derart ausgebildet, daß nicht nur unterschiedliche Schieberventil-Schaltstellungen, sondern zusätzlich auch unterschiedliche Schieberventil-Funktionen einstellbar sind: Der Schieber (143) ist hierzu, zum Einstellen eines bestimmten von mehreren möglichen Funktions-Verstellbereichen, in besonderer Art zu verstellen, beispielsweise können bei einem Planschieber in dessen Schieberfläche quer nebeneinander mehrer Reihen (145,145',145'') von Ausnehmungen (145',146',147') eingearbeitet sein, deren jede Reihe durch Querverschieben des Schiebers (143) in eine Wirkstellung gebracht werden kann, während die anderen Reihen unwirksam sind; die wirksame Reihe bestimmt dabei die Funktionsart des Schieberventils.

Fig.19

Rank Xerox (UK) Business Services

Die Erfindung betrifft ein Schieberventil mit einem in einer einem Gehäuse zugehörenden Schieberbahn beweglichen, vermittels einer Betätigungseinrichtung innerhalb eines Funktions-Verstellbereiches in wenigstens zwei unterschiedliche Schaltstellungen einstellbaren Schieber, wobei der Schieber vermittels an ihm befindlicher Aussparungen in deren Zusammenwirken mit in die Schieberbahn mündenden, im Gehäuse angeordneten Druckmittelkanälen diese Druckmittelkanäle in Abhängigkeit von den Schaltstellungen unterschiedlich miteinander verbindet bzw. voneinander trennt.

Derartige Schieberventile sind in unterschiedlichen Grundausführungen bekannt, beispielsweise kann der Schieber eine Grundform als Zylinderkörper aufweisen, der linear verschieblich in einer innenzylindrischen Schieberbahn eines Gehäuses geführt ist, wobei in die Zylinderkörper-Außenfläche bzw. den Innenzylinder vorzugsweise ringnutartige Aussparungen eingearbeitet sind, zwischen welchen in axial zueinander versetzten Radialebenen am Schieberkörper und/oder an der Schieberbahn ausgebildete Dichtstellen bzw. Dichtungen angeordnet sind. Es sind auch Schieberventile bekannt, bei welchen der linear beweglich geführte Schieber mit einer ebenen Schieberbahn zusammenwirkt. Weiterhin sind Drehschieber bekannt, bei welchen der Schieber als Kreisringscheibe oder Ringscheibe ausgebildet ist, die mit einer ihrer in einer Radialebene liegenden Seitenflächen auf einer ebenen Schieberbahn aufliegt; der Schieber kann in diesem Falle ihn nicht durchsetzende Aussparungen aufweisen. Weiterhin sind Drehschieberventile bekannt, bei welchen der Schieber mit seinen beiden Planseiten an je einer Schieberbahn anliegt, wobei am Schieber diesen durchsetzende und nicht durchsetzende Aussparungen vorhanden sein können. Schließlich sind auch Drehschieberventile mit einem Walzen- bzw. schwach konischen Schieberkörper bekannt, wobei Aussparungen an der Schieberoberfläche bzw. der dieser angepaßten Schieberbahn von Dichtungen umgeben sind.

Bei Schieberventilen ist es bereits prinzipiell bekannt, den Schieber selbst und ein die Schieberbahn aufweisendes Bauteil im Gehäuse aus einem geeigneten Keramikwerkstoff herzustellen, es wird hierzu beispielsweise auf die DE-OS 35 39 316 und DE-OS 35 39 317 verwiesen.

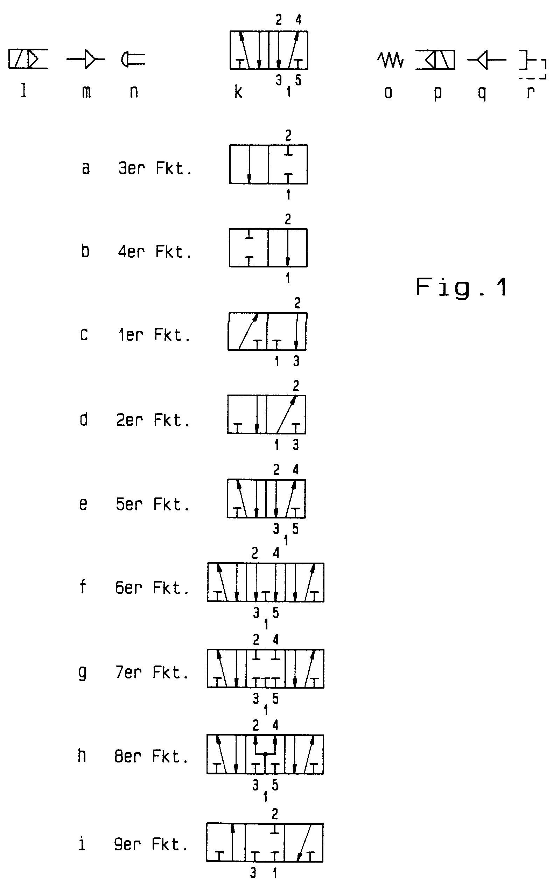

Bei all diesen bekannten Schieberventilen ist es üblich, diese für eine ganz bestimmte Funktion auszubilden, wobei der Schieber zum Einstellen der unterschiedlichen Funktionsverbindungen innerhalb eines Funktions-Verstellbereiches in zumindest zwei, oftmals drei oder noch mehr Schaltstellungen durch Linearverstellung oder Drehung verstellbar ist. Die Ansteuerung bzw. Betätigung der Schieberventile kann üblicherweise magnetisch, durch ein Druckmittel, hier insbesondere über einen Kolben, wobei das Druckmittel durch ein Magnetventil überwacht sein kann, oder von Hand erfolgen; die Rückstellung kann in gleicher Weise, aber auch durch eine Feder oder einen vom Schieberventil ausgesteuerten Druckwechsel erfolgen. Nachstehend werden anhand der Fig.1 einige übliche Schieberventil-Bauarten und -funktionen beispielsweise erläutert:

In Fig.1 sind in den Teilbildern a-i Symbolbilder unterschiedlicher Schieberventile dargestellt, wobei in der der Ruhestellung bzw. Ausgangs- bzw. Normalstellungen entsprechenden Schaltstellung die wie üblich mit den Zahlern 1-5 symbolisierten Leitungsanschlüsse angeschrieben sind; diese Leitungsanschlüsse entsprechen in aufsteigender Reihe den genormten Leitungsanschlußbezeichnungen P,A,R,B und S. Das Teilbild a zeigt somit ein 2/2-Wegeventil in 3er Funktion, welches im Ruhezustand einen Durchgang sperrt und im betätigten Zustand diesen Durchgang freigibt. Das Teilbild b zeigt ebenfalls ein 2/2-Wegeventil mit umgekehrter Funktionsweise in 4er Funktion, welches in der Ruhe-Schaltstellung einen Durchgang freigibt und in seiner betätigten Schaltstellung diesen Durchgang sperrt. Das Teilbild c zeigt ein 3/2-Wegeventile der 1er Funktion, welches im Ruhezustand den Leitungsanschluß 2 mit dem Leitungsanschluß 3, im betätigten Schaltzustand dagegen mit dem Leitungsanschluß 1 verbindet, während der jeweils restliche Leitungsanschluß 1 bzw. 3 abgesperrt ist. Das Teilbild d zeigt ein 3/2-Wegeventil mit 2er Funktion, wobei die Ruhe- und die Arbeitsschaltstellung, bezogen auf das Schieberventil nach Teilbild c, vertauscht sind. Das Teilbild e zeigt ein 5/2-Wegeventil der 5er Funktion, das Teilbild f ein 5/3-Wegenventil der 6er Funktion, das Teilbild g ein 5/3-Wegeventil der 7er Funktion und das Teilbild h ein 5/3-Wegeventil der 8er Funktion, wobei jeweils fünf Leitungsanschlüsse und zwei bzw. drei Schaltstellungen vorgesehen sind, die jeweiligen Leitungsverbindungen in den einzelnen Schaltstellungen sind in Analogie zu den diesbezüglich beschriebenen Teilbildern a-d ohne weiteres ableitbar. In Teilbild i ist schließlich noch ein 3/3-Wegeventil der 9er Funktion dargestellt, dessen Funktionsweise ebenfalls ohne weiteres erkennbar ist. In Fig.1 ist die jeweilige Funktion des Schieberventils, zu Teilbild a beispielsweise "3er Fkt" eingeschrieben. In Teilbild k ist zum Erläutern der Schieberventil-Betätigung nochmals ein Schieberventil gemäß Teilbild e, also ein 5/2-Wegeventil der 5er Funktion dargestellt, wobei linksseitig die Ansteuerungsmöglichkeiten im Teilbild l durch einen Magneten bzw. durch ein von einem Magnetventil überwachtes Druckmittel, im Teilbild m eine reine Druckmittelansteuerung und im Teilblild n eine mechanische bzw. Handbetätigung angedeutet sind. Rechtsseitig zum Teilbild k sind Rückstellungen angedeutet, nach Teilbild o durch eine nach Teilbild p magnetisch oder vermittels eines durch ein Magnetventil überwachten Druckmittels, nach Teilbild q eine Druckmittelrückstellung und nach Teilbild r durch ein vom Schieberventil nach Teilbild k selbst gesteuertes Druckmittel.

Bisher war es allgemein üblich, für alle in ihrer Funktion gemäß den Teilbildern a-i der Fig.1 unterschiedlichen Schieberventile ein eigens hierfür hergestelltes Schieberventil zu verwenden, lediglich bei nur vertauschten Schaltstellungen konnte mitunter auch das gleiche Schieberventil mit vertauschter Ansteuerung und Rückstellung benutzt werden. Obwohl es bereits bekannt ist, die Ansteuerung und/oder die Rückstellung gemäß den Teilbildern l-r zumindest innerhalb bestimmter Grenzen austausch- bzw. anpaßbar am Schieberventil anzuordnen, ergab sich doch eine Vielzahl von Schieberventilkonstruktionen zum Abdecken der unterschiedlichen Funktionen. Je Funktion war daher die erforderliche Stückzahl von Schieberventilen beschränkt, die Herstellung und auch Lagerhaltung wurde durch die Vielzahl unterschiedliche Funktionen aufweisender Schieberventile mit jeweils nur beschränkter Stückzahl entsprechend aufwendig und teuer.

Es ist zwar bereits bekannt, Schieberventile derart zu konstruieren, daß durch Austausch bestimmter Teile unterschiedliche Funktionen bei ansonsten gleichem Aufbau erfüllbar sind, es ist auch bereits bekannt, einen Funktionswechsel lediglich durch Demontage und Wiedermontage in umgekehrter Baulage eines Schieberventil-Einzelteils zu erzielen. Diese Änderungen erfordern jedoch stets eine Demontage und Wiedermontage mit neuen bzw. umgekehrten Bauteilen, was aufwendig und nicht immer möglich ist, und diese Änderungen sind zudem nur je nach Schieberventil-Bauart innerhalb enger Grenzen möglich; in der Praxis konnten sich solche in ihrer Funktion umbaubare Schieberventile bisher nicht durchsetzen.

Es ist demgemäß Aufgabe der Erfindung, ein Schieberventil der eingangs genannten Art mit einfachen Mitteln derart auszugestalten, daß es auf zumindest zwei oder auch mehrere der in Fig.1, Teilbild a-i, dargestellten Funktionen ohne Demontage- und Montagearbeiten, dem Austausch von Einzelteilen und dgl., sondern lediglich durch Einstellungsmaßnahmen von Außen einstellbar ist.

Diese Aufgabe wird nach der Erfindung dadurch gelöst, daß am Schieber räumlich zueinander versetzt wenigstens zwei in wenigstens einer Schaltstellung unterschiedliche Funktionsverstellbereiche vorgesehen sind, deren jeweils einer vermittels einer Stellvorrichtung in die Schieberbahn einstellbar ist. Dabei bedeutet jeder Funktions-Verstellbereich eine Schieberventil-Funktion gemäß einem Teilbild a-i der Fig.1.

Nach der weiteren Erfindung vorteilhafte und zweckmäßige Weiterbildungsmöglichkeiten eines derartigen Schieberventils sind in den Unteransprüchen angegeben und in der nachfolgenden Beschreibung erläutert.

In den Zeichnungen Fig.2 bis Fig.21 sind als Ausführungsbeispiele für die Erfindung unterschiedlich ausgebildete Schieberventile bzw. deren Einzelheiten z.T. schematisch dargestellt und erläutert. In

Fig.2 ist ein Schieberventil großenteils im Längsschnitt dargetellt, welches als 3/2-Wegeventil beider Funktionen, als 5/2-Wegeventil und als 5/3-Wegeventil aller drei Funktionen einstell- und verwendbar ist; die

Fig.3 zeigt eine Stirnansicht dieses Schieberventils in um 90° gedrehter Lage, die

Fig.4 zeigt eine teilweise aufgeschnittene Aufsicht und

Fig.5 eine Aufsicht des Schieberventils. In

Fig.6 sind Einzelteile des Schieberventils schematisch in perspektivischer Ansicht dargestellt und die

Fig.7 zeigt die Schieberspiegel, d.h. die Schieberbahn und die mit dieser zusammenwirkende Fläche am Schieber, dieses Schieberventils in dessen unterschiedlichen Funktionen und Schaltstellungen. Die

Fig.8 zeigt einen Längsschnitt durch den zentralen Teil eines Schieberventils, mit zu Fig.2 leicht abgewandelter Bauart, das jedoch in vergrößertem Maßstab dargestellt ist. Die

Fig.9 zeigt einen Längsschnitt durch den zentralen Teil eines abgewandelten Schieberventils, die

Fig.10 zeigt eine Aufsicht auf ein aufgeschnittes Ventil nach Fig.9. Die

Fig.11 zeigt eine Aufsicht entsprechend Fig.10 auf eine nochmals abgewandelte Ausführungsform des Schieberventils. In

Fig.12a sind Längsschnitt, Querschnitt und Horizontalschnitt durch eine abgewandelte Bauform des Schieberventils zusammen mit gesondert dargestellten Einzelteilen dieses Schieberventils in zu den vorangehenden Figuren verkleinertem Maßstab dargestellt und die

Fig.12b zeigt nochmals die Schnittbilder der Fig.12a in vergrößertem Maßstab; die

Fig.13 zeigt die Schieberspiegelflächen dieses Schieberventils in stark vergrößertem Maßstab und die

Fig.14 zeigt die Schieberspiegelflächen dieses Schieberventils in dessen Einstellung auf drei unterschiedliche Funktionen und in deren Schaltstellungen in mittlerem Maßstab. Die

Fig.15 zeigt ein Schnittbild durch den zentralen Teil einer weiteren Schieberventil-Bauform, die

Fig.16a zeigt ein Einzelteil mit Schieberbahn dieses Schieberventils in verkleinertem Maßstab und die

Fig.16b zeigt die beiden Seiten der hierbei verwendeten Drehschieber. In

Fig.17 sind die Drehschieber zusammen mit den die ihnen zugeordneten Schieberbahnen tragenden Teilen axial auseinandergezogen und im vergrößerten Maßstab für drei unterschiedliche Funktionen des Schieberventils in deren jeweiliger Mittelbzw. Ruhe-Schaltstellung dargestellt und in

Fig.18 sind die Schaltvorgänge dieses Schieberventils in den drei Funktionensweisen sowie den jeweils zugeordneten, drei Schaltstellungen nochmals schematisch dargestellt. In

Fig.19 ist in Längsschnitt, Querschnitt und in Aufsicht der zentrale Abschnitt einer weiteren Ausführungsform eines Schieberventils dargestellt, in

Fig.20 sind die Schieberspiegelflächen dieses Schieberventils in dessen Einstellung auf drei unterschiedliche Funktionen sowie in den diesen Funktionen zugeordneten Schaltstellungen zusammen mit den schematischen Prinzipbildern dieser Funktionen dargestellt. In

Fig.21 ist in Längsschnitt, Stirnansicht und Aufsicht eine Federbaueinheit gezeigt, wie sie am Schieberventil nach den Figuren 2-5 zu dessen Betätigung vorgesehen ist.

Fig.22 zeigt ein im wesentlichen der Fig.8 entsprechendes Schnittbild durch ein abgewandeltes Schieberventil und in

Fig.23 ist ein Drehantrieb in Aufsicht dargestellt.

In den Zeichnungen sind gleiche oder einander weitgehend entsprechende Teile z.T. mit gleichen Bezugszahlen versehen.

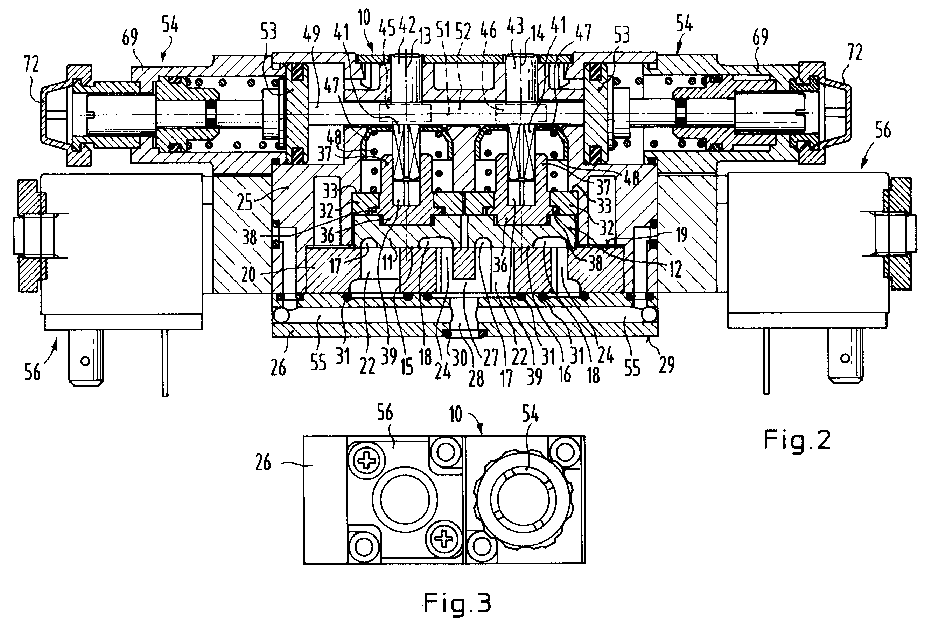

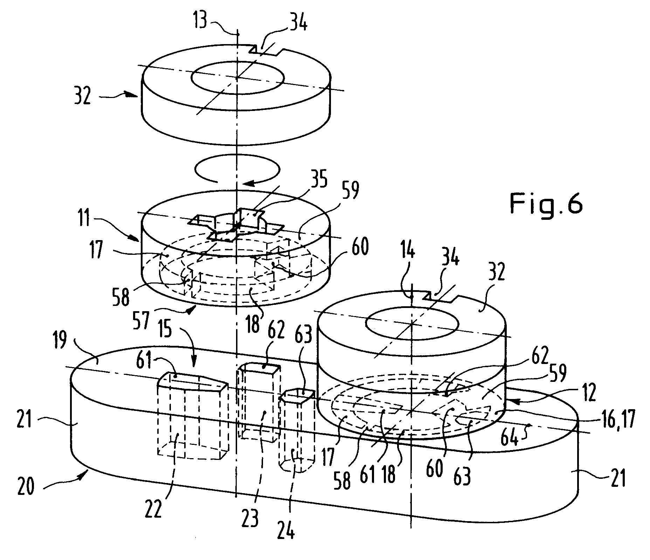

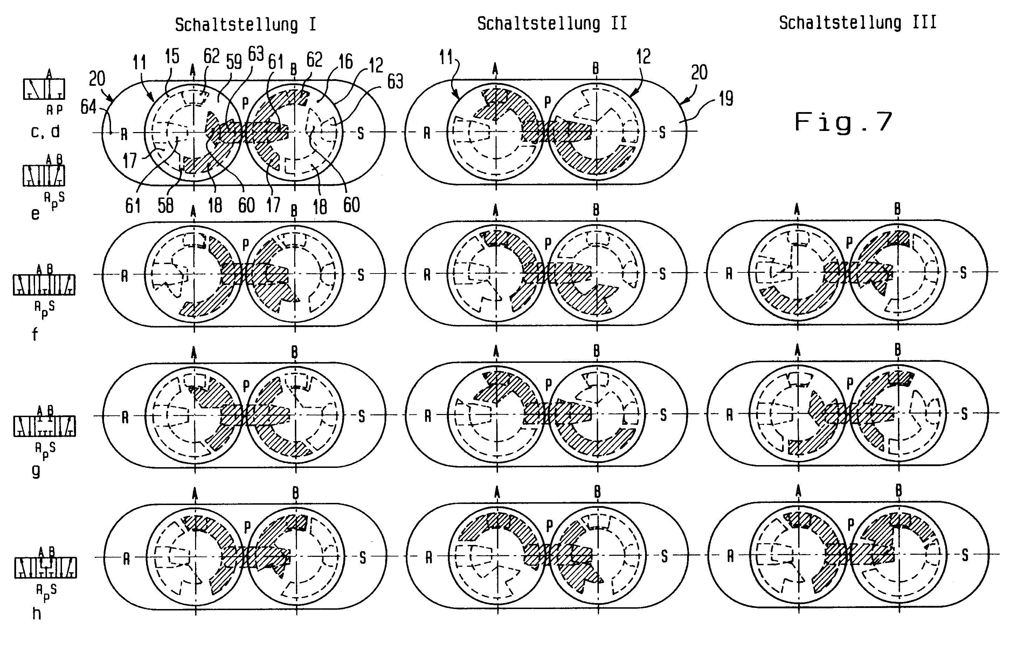

Das im wesentlichen in den Figuren 2-7 dargestellte Schieberventil 10 ist als ein Drehschieberventil mit zwei Teildrehschiebern 11 und 12 konzipiert, wobei diese Teildrehschieber 11 und 12 seitlich zueinander versetzt und mit zueinander parallelen Achsen 13,14 derart angeordnet sind, daß sich die Schieberbahnen 15,16 für beide Teildrehschieber 11 und 12 in einer Ebene befinden. Die beiden Teildrehschieber 11 und 12 sind zueinander gleichartig ausgebildet, sie weisen jeweils eine kreisscheibenförmige Gestalt auf und sie sind auf ihrer der Schieberbahn 15 bzw. 16 zugewandten Seite mit jeweils zwei auf einem Teilkreis befindlichen Teilringnuten 17 und 18 versehen, welche später in Verbindung mit den Figuren 6 und 7 ausführlich beschrieben werden; aus Fig.2 ist ersichtlich, daß diese Teilringnuten 17 und 18 eine Tiefe aufweisen, welche wesentlich geringer ist als die axiale Stärke der Teildrehschieber 11 und 12, im dargestellten Ausführungsbeispiel geringer ist als die Hälfte dieser axiale Stärke der Teildrehschieber 11 und 12.

Die beiden Schieberbahnen 15 und 16 sind ebenfalls zueiander gleichartig ausgebildet, ihrer genaue Ausbildung wird später in Verbindung mit den Figuren 6 und 7 erläutert. Die beiden Schieberbahnen 15 und 16 befinden sich an einer Planfläche 19 eines Schieberbahnteiles 20, welches als ein prismatischer Körper mit rechteckigem Querschnitt und halbzylindrisch gerundeten Stirnflächen 21 ausgebildet ist, wie besonders deutlich aus Fig.6 ersichtlich ist. Das Schieberbahnteil 20 ist je Schieberbahn 15 bzw. 16 von jeweils drei Druckmittelkanälen 22,23 und 24 durchsetzt, von welchem im Schnittbild Fig.2 die beiden Druckmittelkanäle 22 und 24 jeweils geschnitten dargestellt sind. Aus Fig.2 ist weiterhin ersichtlich, daß das Schieberbahnteil 20 in einer Ausnehmung des Gehäuses 25 des Schieberventils 10 durch eine an das Gehäuse 25 angeflanschte Anschlußplatte 26 gehalten und von dieser abgedeckt wird. Die Druckmittelkanäle 22,23 und 24 des Schieberbahnteils 20 finden dabei in der Anschlußplatte 26 ihre Fortsetzung, wie es in Fig.2 für die beiden einander unmittelbar benachbarten Druckmittelkanäle 24 und 22 der Schieberbahnen 15 und 16 mit dem die Anschlußplatte 26 durchdringenden Druckmittelkanal 28 dargestellt ist; noch im Schieberbahnteil 20 sind die beiden Druckmittelkanäle 24 und 22 durch einen Querkanal 27 zusammengefaßt. Die Anordnung dieser Fortsetzungs-Druckmittelkanäle in der Anschlußplatte 26 ist dabei derart gestaltet, daß die Anschlußplatte 26 auf ihrer dem Schieberbahnteil 20 abgewandten Flanschfläche 29 ein übliches, nicht dargestelltes Flansch-Anschlußbild eines 5/3-Wegeventils aufweist; das Schieberventil 10 ist somit in der für 5/3-Wegeventile üblichen Art an einen nicht dargestellten Ventilträger anflanschbar, wobei die Kanalübergänge durch eine nicht dargestellte, entsprechende Durchbrechungen aufweisende Dichtplatte oder durch diese Kanalübergänge abdichtende O-Ringe 30 abdichtbar sind. Abweichend hierzu können an der Anschlußplatte 26 auf der dem Schieberbahnteil 20 abgewandten Seite auch Leitungsanschlüsse für die Anschlußleitungen des Schieberventils 10 vorgesehen sein. Das Schieberbahnteil 20 wird durch die Anschlußplatte 26 im Gehäuse 25 nicht in Anlage an diesem Gehäuse 25, sondern in Anlage vermittels seiner Schieberbahnen 15,16 an den Teildrehschiebern 11 und 12 gehalten; die Kanalübergänge vom Schieberbahnteil 20 zur Anschlußplatte 26 sind durch O-Ringe 31 abgedichtet, welche zugleich als Federungselemente zwischen der Anschlußplatte 26 und dem Schieberbahnteil 20 zu dessen federnder Andrückung an die Teildrehschieber 11 und 12 dienen. Zur Abstützung entgegen der durch die O-Ringe 31 bewirkten, elastischen Anlage des Schieberbahnteiles 20 liegen an den Teildrehschiebern 11 und 12 auf deren dem Schieberbahnteil 20 abgewandten Seite ringförmig ausgebildete Druckplatten 32 an, welche ihrerseits durch Anlage an Ringschultern 33 des Gehäuses 25 abgestützt sind. Die Druckplatten 32 werden durch je eine radial vorspringende, nicht dargestellte Gehäusenase drehfest gehalten, welche in eine aus Fig.6 ersichtliche Axialnut 34 jeder Druckplatte 32 eingreift.

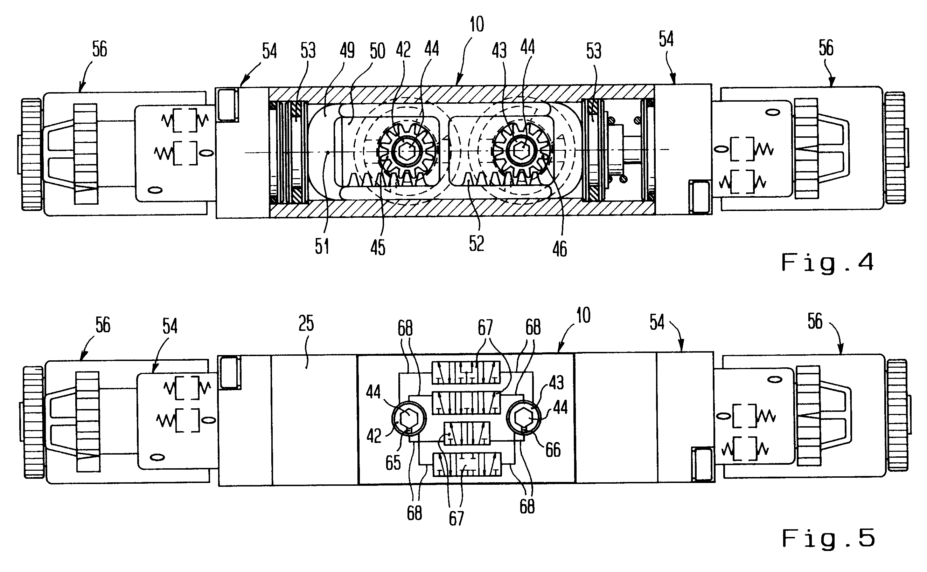

Die Teildrehschieber 11 und 12 weisen an ihren dem Schieberbahnteil 20 abgewandten Seiten zentrisch je eine kreuzschlitzförmige Aussparung 35 auf, wie aus Fig.6 ersichtlich ist. In diese Aussparungen 35 greift ein jeweils entsprechend geformter Ansatz 36 einer Mitnehmerhülse 37 drehmomentübertragend ein, wie aus Fig.2 ersichtlich ist. Durch Eingreifen eines Ringflansches 38 der Mitnehmerhülsen 37 in entsprechend geformte, ringförmige Ausnehmungen der Druckplatten 32 sind die Mitnehmerhülsen 37 gegen axiale Verschiebungen und damit auch gegen Ausheben ihres Eingriffes in die Teildrehschieber 11 bzw. 12 gesichert. Jede Mitnehmerhülse 37 weist eine vom ihrem dem Ansatz 36 abgewandten Ende ausgehende, unrunde Sackbohrung 39 auf, im Ausführungsbeispiel nach Fig.2 sind diese Sackbohrungen 39 mit quadratischem Querschnitt ausgeführt. In die Sackbohrungen 39 greift axial verschieblich, aber unverdrehbar jeweils ein Vierkantansatz 41 einer zur Achse 13 bzw. 14 koaxialen Antriebswellse 42 bzw. 43 ein, deren jede im Gehäuse 25 drehbar und axial verschieblich gelagert ist. Die den Vierkantansätzen 41 abgewandten Enden der Antriebswellen 42 und 43 sind von ventilaußen her frei zugänglich, sie sind dort mit zum Ansetzen eines Drehwerkzeuges geeigneten Flächen versehen, im Ausführungsbeispiel mit im Querschnitt sechseckigen Ausnehmungen 44, wie aus Fig.4 und 5 entnehmbar ist. Die Antriebswellen 42 und 43 sind fest mit je einem Zahnrad 45 bzw. 46 versehen, die Zahnräder 45 und 46 dienen als axiale Widerlager für von seiten der Vierkantansätze 41 aufgeschobene Federteller 47, zwischen welche und die Druckplatten 32 jeweils eine Feder 48 mit Vorspannung eingespannt ist; die Zahnräder 45 und 46 sind dabei durch axiale Anlage am Gehäuse 25 gegen ein Verschieben in Wirkrichtung der Federn 48 gesichert. Die Anordnung ist derart getroffen, daß die Antriebswellen 42 und 43 mitsamt den Zahnrädern 45 und 46 sowie den Vierkantansätzen 41 aus ihrer in Fig.2 dargestellten Normallage entgegen der Kraft der Federn 48 um zumindest die axiale Breite der Zahnräder 45,46 bzw. einer mit diesen zusammenwirkenden Zahnstange 52 verschiebbar sind.

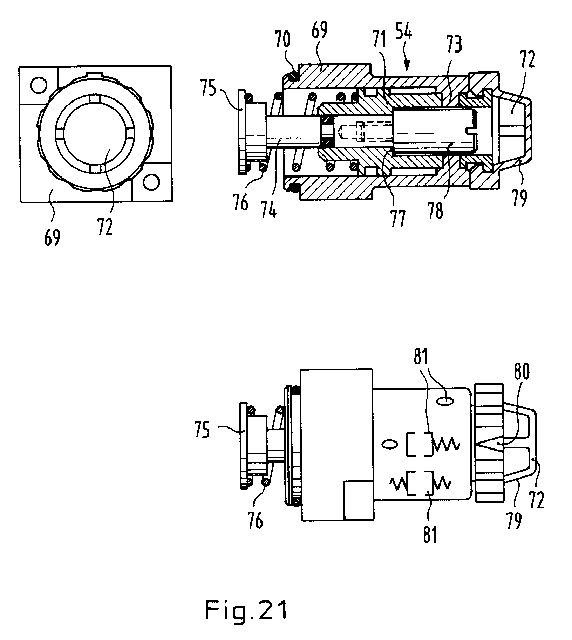

Die beiden Zahnräder 45 und 46 befinden sich in einer Ebene mit einem rahmenartigen Teil 49, sie befinden sich in einer im wesentlichen rechtekkigen Ausnehmung 50 dieses in der erwähnten Ebene in Richtung einer Verbindungsgeraden 51 zwischen den Zahnrädern 45 und 46 im Gehäuse 25 verschieblich gelagerten Teiles 49 (Figuren 2 und 4). Ein seitlich der Ausnehmung 50 befindlicher Längsbalken des Teiles 49 ist als Zahstange 52 mit der Ausnehmung 50 zugewandter Verzahnung ausgebildet, die beiden Zahräder 45 und 46 kämmen in ihrer in Fig.2 dargestellten, unter Federkraft 48 gehaltenen Lage mit dieser Zahnstange 52. Das Teil 49 liegt an seinen beiden, in Richtung der Verbindungsgeraden 51 liegenden Stirnseiten an je einem Kolben 53 an, die beiden Kolben 53 gehören zur Betätigungseinrichtung des Schieberventils 10. An die beiden Kolben 53 schließt sich je einer Federbaueinheit 54 an, die beiden Federbaueinheiten 54 sind mit zur Verbindungsgeraden 51 koaxialer Achsrichtung an das Gehäuse 25 angeflanscht. Der Aufbau der Federbaueinheiten 54 wird später anhand der Fig.21 beschrieben, vorerst ist lediglich wesentlich, daß die Kolben 53 je nach Druckmittelbeaufschlagung auf ihren dem Teil 49 abgewandten Seiten das Teil 49 und damit die Zahnstange 52 zu verschieben und in eine der beiden in Richtung der Verbindungsgeraden 51 liegenden Endstellungen oder eine dazwischen liegende Mittel-, Normal- oder Grundstellung einzustellen vermögen; die Kolben 53 stellen somit Eingangteile der Betätigungseinrichtung dar, welche Verstellbewegungen für die beiden Teildrehschieber 11 und 12 zu erzeugen bzw. einzuleiten vermögen, diese Verstellbewegung wird dabei über eine Funktionskette übertragen, welche das Teil 49 mit der Zahnstange 52, die Zahnräder 45 und 46, die Antriebswellen 42 und 43, den Eingriff von deren Vierkantansätzen 41 in die Sackbohrungen 39 der Mitnehmerhülsen 37 und deren Drehkoppelung über die Ansätze 36 sowie die Aussparungen 35 mit den Teildrehschiebern 11 und 12 umfaßt.

Der Druckmittelkanal 28 stellt den sogenannten P- bzw. 1-Leitungsanschluß des Schieberventils dar, welcher wie üblich an eine Druckmittelquelle anzuschließen ist. Von diesem Druckmittelkanal 28 zweigen Zweigkanäle 55 ab, welche in der Anschlußplatte 26 und unter Umgehung des Schieberbahnteiles 20 im Gehäuse 25 zu an dessen Stirnseiten angeflanschten Magnetventilen 56 verlaufen; die beiden Magnetventile 56 sind parallel versetzt zu den Federbaueinheiten 54 an das Gehäuse 25 angeflanscht und überwachen in üblicher, nicht dargestellter Weise die Druckmittelbeaufschlagung bzw. -entlastung der Kolben 53 aus den Zweigkanälen 55 bzw. zu einer nicht dargestellten Entlastungsleitung bzw. Entlüftung.

Bei einer Ausbildung des vorstehend in seinem Aufbau beschriebenen Schieberventils derart, daß es wahlweise als ein 3/2-Wegenventil der 1er oder 2er Funktion, als ein 5/2-Wegeventil der 5er Funktion oder als ein 5/3-Wiegeventil der 6er, 7er oder 8er Funktion, also als ein Schieberventil gemäß einem der Teilbilder c,d,e,f,g oder h der Fig.1 betreibbar ist, ist das Schieberbahnteil 20 hinsichtlich seiner gleichartig gestalteten Schieberbahnen 15 und 16 und sind die ebenfalls gleichartigen Teildrehschieber 11 und 12 hinsichtlich ihrer mit den Schieberbahnen 15 und 16 zusammenwirkenden, im weiteren Schieberfläche 57 genannten Seite entsprechend den Figuren 6 und 7 auszubilden; in Fig.7 sind zur Verdeutlichung links nochmals die Schieberventilsymbole gemäß den ebenfalls angegebenen Teilbildern c-h der Fig.1 eingezeichnet. Hiernach weist jeder kreisscheibenartige Teildrehschieber 11, 12 auf seiner der Schieberbahn 15 bzw. 16 zugewandten Schieberfläche 57 die beiden Teilringnuten 17 und 18 auf, die stirnseitig einerseits durch einen schmalen, schrägen Steg 58 und andererseits durch einen breiten Steg 59 voneinander getrennt sind. Die eine Teilringnut 18 ist mit einem an den breiten Steg 59 angrenzenden, zu diesem Steg 59 nach radialinnen versetzten, schräg endenden Nutfortsatz 60 versehen, der sich in Umfangsrichtung über etwa die halbe Breite des breiten Steges 59 erstreckt. In den Schieberbahnen 15 und 16 befinden sich jeweils drei Mündungen 61,62 und 63 der das Schieberbahnteil 20 durchsetzenden Druckmittelkanäle 22,23 und 24, wie es in Fig.6 für die linke Schieberbahn 15 dargestellt ist; bei der rechten Schieberbahn 16 sind nur die Mündungen 61,62 und 63 eingezeichnet, die Druckmittelkanäle sind weggelassen. Die Mündungen 61,62 und 63 sind um die Achse 13 bzw. 14 um jeweils 90° zueinander versetzt angeordnet, wobei zwei jeweils in Radial- und in Umfangsrichtung etwa gleiche Weite aufweisende Mündungen 62 und 63 ausschließlich mit den Teilringnuten 17 bzw. 18 zu kommunizieren vermögen und die dritte, in Radialrichtung nach innen verlängerte Mündung 61 zusätzlich mit dem Nutfortsatz 60 kommunizierbar angeordnet ist. Die beiden radial verlängerten Mündungen 61 liegen symmetrisch auf einer Verbindungsgeraden 64 durch die Schieberflächen-Mittelpunkte, von den beiden einander benachbarten Mündungen 63 und 61 der beiden Schieberbahnen 15 und 16 ist nur die Mündung 61 der rechten Schieberbahn nach radialinnen verlängert und die beiden restlichen, mittleren Mündungen 62 liegen zur gleichen Seite der Verbindungsgeraden 64. Über die Druckmittelkanäle 22,23 und 24 sowie deren Verlängerungen in der Anschlußplatte 26 stehen an der linken Schieberbahn 15 die Mündung 61 mit dem R- bzw. 3-, die Mündung 62 mit dem A- bzw. 2-, die Mündung 63 mit dem P- bzw. 1-Leitungsanschluß, und an der rechten Schieberbahn 16 die Mündung 61 ebenfalls mit dem P- bzw. 1-, die Mündung 62 Mit dem B- bzw. 4- und die Mündung 63 mit dem S- bzw. 5-Leitungsanschluß des Schieberventils 10 in Verbindung. In Fig.7 sind in allen Teilbildern die jeweils P- bzw. 1-Druck führenden Mündungen und Nuten schraffiert.

In Fig.7 sind den einzelnen Schieberventilsymbolen und deren einzelnen Schaltstellungen zugeordnet Aufsichten auf das Schieberbahnteil 20 mit dessen Schieberbahnen 15 und 16 sowie auf diesen aufgesetzten Teildrehschiebern 11 und 12 dargestellt, es sind die Teilringnuten 17 und 18 mit dem Nutfortsatz 60 und die Mündungen 61-63 mit den diesen jeweils zugeornteten Leitungsanschluß-Bezeichnungen gezeigt, die Teildrehschieber 11 und 12 sind dabei in unterschiedlichen Drehlagen eingezeichnet: Unmittelbar rechts der Schieberventilsymbole zeigt in der vertikalen Reihe "Schaltstellung I" die Figur 7 diejenigen Drehlagen der Teildrehschieber 11 und 12, welche der Mittel-, Ruhe- bzw. Normalstellung des Schieberventils gemäß dem Schieberventilsymbol entsprechen, in der rechts anschließenden, vertikalen Reihe "Schaltstellung II" der Fig.7 sind die Teildrehschieber 11 und 12 in Drehlagen dargestellt, welche die jeweils linke Schaltstellung des Schieberventilsymbols ergeben und in der anschließenden, ganz rechts, vertikalen Reihe sind unter der Bezeichnung "Schaltstellung III" die Teildrehschieber 11 und 12 in Drehlagen gezeigt, welche bei den Schieberventilsymbolen für 5/3-Wegeventile jeweils die dem rechten Schaltbild entsprechenden Schaltstellungen ergeben. Die in horizontalen Zeilen rechts von den Schieberventilsymbolen befindlichen Schaltstellunen sind also vermittels der Kolben 53 bzw. Federbaueinheiten 54 durch gemeinsames und synchrones Drehen der beiden Teildrehschieber 11 und 12 einstellbar, während ein Übergang von einem Schieberventilsymbol zu einem anderen, also in vertikaler Richtung der in Fig.7 dargestellten Reihen, nur durch Verändern der Drehstellungen der Teildrehschieber 11 und 12, z. T. gesondert voneinander, relativ zu den Stellungen der Kolben 53 und damit also auch relativ zur Stellung der Zahnstange 52 möglich ist. Durch eine derartige Relativverstellung kann das Schieberventil 10 also in seiner Funktion auf jeweils eines der in Fig.7 dargestellten Schieberventilsymbole, also auf jeweils einen Funktions-Verstellbereich innerhalb der vier untereinander dargestellten Funktions-Verstellbereiche, eingestellt werden. Zu dieser Relativverstellung ist vermittels eines geeigneten Druck- und Drehwerkzeuges, nach dem Ausführungsbeispiel gemäß Fig.2 zweckmäßig mit einem nicht dargestellten Imbusschlüssel, die Antriebswelle 42 entgegen der Kraft der Feder 48 in das Gehäuse 25 niederzudrücken, derart, daß das Zahrad 45 aus der Zahnstange 52 ausrastet, und sodann ist die Antriebswelle 42 und damit der Teildrehschieber 11 vermittels des Werkzeuges in eine geeignete Drehlage einzustellen und in dieser Lage wieder freizugeben; bei dieser Freigabe drückt die Feder 48 die Antriebswelle 42 mitsamt dem Zahrad 45 wieder in die obere Endstellung, wobei das Zahrad 45 wieder in die Zahnstange 52 einrastet. Sodann ist dieselbe Prozedur an der Antriebswelle 43 vorzunehmen, wobei der Drehwinkel, um welche die Antriebswelle 43 verstellt wird, dem Verstellwinkel für die Antriebswelle 42 gleich oder von diesem verschieden sein kann. Zum einfachen Einstellen des jeweils gewünschten Funktions-Verstellbereiches ist es zweckmäßig, wie in Fig.5 dargestellt, die Antriebswellen 42 und 43 stirnseitig mit je einer Markierung 65 bzw. 66 zu versehen und auf dem Gehäuse 25 zwischen den Antriebwellen 42 und 43 die den einzelnen Funktions-Verstellbereichen entsprechenden Schieberventil-Symbole, in Fig.5 mit der Bezugszahl 67 bezeichnet, aufzuzeichnen und diese einzelnen Schieberventil-Symbole 67 durch ebenfalls aufgezeichnete Linien 68 mit derartigen Umfangsstellen an den die Antriebswellen 42 und 43 aufnehmenden Gehäusebohrungen zu verbinden, welchen in der Schaltstellung I nach Fig.7 entsprechenden Drehlagen der Teildrehschieber 11 und 12 und dieser Schaltstellung entsprechender Lage der Zahnstange 52 die Markierungen 65 und 66 der Antriebswellen 42 und 43 gegenüberstehen: In der Darstellung nach Fig.5 ist das Schieberventil 10 beispielsweise derart eingestellt, daß es die Funktion eines 5/2-Wegeventils der 5er Funktion entsprechend der oberen, horizontalen Zeile der Fig.7 und damit zugleich auch die Funktionen eines 3/2-Wegenventils der 1er oder 2er Funktion zu erfüllen vermag. Durch das erwähnte Niederdrücken und Verdrehen der Antriebswellen 42 und 43 derart, daß deren Markierungen 65 und 66 mit zu anderen Schieberventil-Symbolen 67 führenden Linien 68 in radial fluchtende Stellungen gelangen, sind bei in Ruhestellung befindlicher Zahnstange 52 die anderen Funktions-Verstellbereiche einstellbar, welche diesem jeweiligen Schieberventil-Symbol 67 entsprechen.

In der in Fig.5 dargestellten Einstellung befinden sich die beiden Teildrehschieber 11 und 12 bei in Ruhestellung befindlichem Schieberventil 10 also in Drehlagen, die der Darstellung in der obersten Zeile und in der vertikalen Reihe "Schaltstellung I" entsprechen. Der linke Teildrehschieber 11 verbindet dabei vermittels seiner Teilringnut 17 die Mündungen 61 und 62 des Schieberbahnteiles 20, also die Leitungsanschlüsse R und A miteinander und sperrt vermittels seiner Teilringnut 18 die Mündung 63 und damit den P-Leitungsanschluß in seinem Bereich ab, während der Teildrehschieber 12 vermittels seiner Teilringnut 17 die Mündung 61 und damit ebenfalls den P-Leitungsanschluß mit der Mündung 62 und damit dem B-Leitungsanschluß verbindet und vermittels seiner Teilringnut 18 die Mündung 63 und damit den S-Leitungsanschluß von weiteren Verbindungen absperrt. Damit ist die Ruhe-Schaltstellung des 5/2-Wegeventils und auch des 3/2-Wegeventils - die B- und S-Anschlüsse sind bei letzterem unbeachtlich - gegeben. Anhand vorstehender Erläuterung sind die weiteren Darstellungen in Fig.7 ohne weiteres verständlich und bedürfen keiner gesonderten Erläuterung, die Übereinstimmung der jeweiligen Verbindungen bzw. Absperrungen von Leitungsanschlüssen mit dem jeweiligen Schaltbild des zugehörigen Schieberventilsymbols ist ohne weiteres erkennbar.

Es kann zweckmäßig sein, für die Antriebswellen 42 und 43 nicht dargestellte, leicht aushebbare bzw. überwindbare Drehrastierungen vorzusehen, welche diese Antriebswellen 42 und 43 in Drehstellungen, in welchen deren Markierungen 65 und 66 mit Linien 68 fluchten, rastieren: Durch derartige Rastierungen wird die Dreheinstellung der Antriebswellen 42 und 43 erleichtert und präzisiert.

Wie bereits beschrieben, sind die Drehstellungen der Teildrehschieber 11 und 12 durch Niederdrücken und Drehen der Antriebswellen 42 und 43 manuell einstellbar. Es ist somit möglich, manuell beliebige Drehstellungen der Teildrehschieber 11 und 12 einzustellen und somit manuell eine beliebige Schaltstellung eines beliebigen Funktions-Verstellbereiches entsprechend den Schieberventil-Symbolen 67 einzustellen. Das Schieberventil 10 ist somit manuell in jede beliebige Schaltstellung jedes Funktions-Verstellbereiches einstellbar, die üblichen Handbetätigungen an den Magnetventilen 56 können somit entfallen, es sind also einfache Magnetventile ohne Handbetätigunmg verwendbar. Es kann zweckmäßig sein, in nicht dargestellter Weise eine Vorrichtung vorzusehen, mit welcher die Antriebswellen 42 und 43 in ihrer niedergedrückten Stellung, also bei von der Zahnstange 52 ausgerasteten Zahnrädern 45 und 46, verrastbar sind: Die jeweils ggf. manuell eingestellte Schaltstellung des Schieberventils bleibt dann erhalten, unabhängig davon, ob über die Magnetventile 56 druckmittelbewirkte Schalt- bzw. Umstellversuche für das Schieberventil 10 erfolgen, Verschiebungen der Kolben 53 und der Zahnstange 52 verbleiben ohne Auswirkung auf die jeweilige Drehstellung der Antriebswellen 42 und 43 und damit der Teildrehschieber 11 und 12.

Bei dem vorstehend beschriebenen Schieberventil verhindert der Eingriff der Ringflansche 38 der Mitnehmerhülsen 37 unter die Druckplatten 32 ein Anheben und damit Auskuppeln der Mitnehmerhülsen 37 von den Teildrehschiebern 11 und 12 bei Anhebevorgängen der Antriebswellen 42 und 43, ein ungewolltes Auskuppeln der Teildrehschieber 11 und 12 von den Mitnehmerhülsen 37 ist also ausgeschlossen.

Beim vorstehend beschriebenen Schieberventil 10 können das Schieberbahnteil 20, die Teildrehschieber 11 und 12 und/oder die Druckplatten 32 aus Kunststoff, Metall oder bevorzugt einem Keramikwerkstoff bestehen, ähnliche Materialien sind bei den entsprechenden Teilen der nachfolgend zu beschreibenden Schieberventile verwendbar.

In Abänderung zum beschriebenen Schieberventil 10 ist es möglich, das Schieberbahnteil 20 geteilt auszubilden, so daß jedem Teildrehschieber 11 und 12 ein eigenes Schieberbahnteil zugeordnet wird; diese Ausführung ist nicht dargestellt. Die beiden Schieberbahnteile können zweckmäßig gleichartig ausgebildet werden, bei Bedarf lediglich einfacher Funktions-Verstellbereiche für das Schieberventil kann ggf. eines dieser Schieberbahnteile durch eine einfache Platte ersetzt werden oder mitsamt dem zugehörigen Teildrehschieber und dessen zugehöriger Dreheinrichtung zum Verbilligen des Schieberventils weggelassen werden.

Die Federbaueinheit 54 weist gemäß Fig.21 ein Gehäuse 69 auf, welches vermittels eines O-Ringes 70 dicht an das Gehäuse 25 anflanschbar ist. Im Gehäuse 69 ist abgedichtet axialverschieblich eine als Widerlager dienende Kulissenhülse 71 gelagert, auf deren aus dem Gehäuse 69 ins Freie ragenden Ende ein Handrad 72 sitzt. Die Kulissenhülse 71 trägt an einem zylindrischen Schaft eine in Abwicklung stufenartige Kulissenbahn mit drei axial zueinander versetzten Stufen, in welche ein stiftartig nach radialinnen ragender Nocken 73 des Gehäuses 69 eingreift; durch Axialverschieben und Drehen des Handrades 72 ist die Kulissenhülse 71 relativ zum Gehäuse 69 in drei axial unterschiedliche Relativstellungen einstellbar, in der Darstellung nach Fig.21 ist die linke Endstellung der Kulissenhülse 71 relativ zum Gehäuse 69 eingestellt. Die Kulissenhülse 71 ist abgedichtet axialverschieblich von einem Zuganker 74 durchgriffen, der dem Handrad 72 abgewandt mit einem Federteller 75 endet. Zwischen den Federteller 75 und die Kulissenhülse 71 ist eine Feder 76 eingespannt. Die Kulissenhülse 71 ist innenseitig mit einer Ringschulter 77 versehen, gegen welche sich ein im Durchmesser verstärkter Abschnitt 78 des Zugankers 74 unter der Kraft der Feder 76 zum Abfangen des Zugankers 74 anzulegen vermag. Bei an der Ringschulter 77 anliegendem Abschnitt 78 endet dieser Abschnitt 78 kurz vor dem Handrad 72, welches einen annähernd zylindrischen Abschnitt 79 aufweist, in welchen der Abschnitt 78 bei unter Spannen der Feder 76 erfolgender Verschiebung des Zugankers 74 relativ zur Kulissenhülse 71 einzutreten vermag; zumindest ein Teil des Abschnittes 79 des Handrades 72 ist aus durchsichtigem oder durchscheinendem Werkstoff gefertigt, derart, daß das Eintreten des Abschnittes 78 in den Abschnitt 79 beobachtbar ist. Das Handrad 72 trägt an seinem Außenumfang eine Markierung 80 und das Gehäuse 69 ist an seiner Umfangsfläche mit drei in Umfangsrichtung versetzten Einstellungssymbolen 81 versehen, welche den Axialeinstellungen der Kulissenhülse 71 vermittels ihrer Kulissenführung und damit den Dreheinstellungen des Handrades 72 derart zugeordnet sind, daß die jeweilige Einstellung eindeutig erkennbar ist. Die Einstellungssymbole 81 sind dabei derart gewählt, daß die jeweils eingestellte Funktionsweise des Schieberventils als stabil in der Mittelstellung (in Fig.21, Aufsicht, unterstes Einstellungssymbol 81), monostabil in einer End-Schaltstellung (mittleres Einstellungssymbol) oder bistabil bzw. in seiner jeweiligen Schaltstellung verbleibend (oberstes Einstellungssymbol 81) erkennbar ist. In der erwähnten Reihenfolge der Einstellungssymbole 81 befindet sich die Kulissenhülse 71 relativ zum Gehäuse 69 axial in ihrer mittleren Lage, in ihrer linken und in ihrer rechten Endlage. Die Einstellungssymbole 81 zeigen dabei auch, wie eine ggf. gegenüberliegend vorhandene, zweite Federbaueinheit 54 einzustellen ist.

Beim Ausführungsbeispiel des Schieberventils 10 nach Fig.2 ist die rechte Federbaueinheit 54 übereinstimmend zur Einstellung nach Fig.21 derart eingestellt, daß sich die Kulissenhülse 71 in ihrer linken Endstellung befindet; bei der links in Fig.2 dargestellten Federbaueinheit 54 befindet sich dagegen die Kulissenhülse 71 in der entgegengesetzten Einstellungslage, das Handrad 72 weist dabei eine gewisse Entfernung zum Gehäuse 69 auf. Es ist aus Fig.2 ersichtlich, daß bei dieser Einstellung die Federbaueinheiten 54 die Zahnstange 52 bei unbeaufschlagten Kolben 53 in deren linken Endlagen halten: Die Federteller 75 beider Federbaueinheiten 54 liegen dabei bei durch Anlage der Abschnitte 78 an den Ringschultern 77 abgefangenem Zugankern 74 vermittels ihrer Federteller 75 an den Kolben 53 beaufschlagungsraumseitig an. Durch vom Magnetventil 56 steuerbares Druckbeaufschlagen des linken Kolbens 53 ist dieser mitsamt der Zahnstange 52 und des

anderseitigen Kolbens 53 unter Kompression der Feder 76 der rechtsseitigen Federbaueinheit 54 verschiebbar und somit das Schieberventil 10 umschaltbar. Der Abschnitt 78 der rechtsseitigen Federbaueinheit 54 tritt dabei in den Abschnitt 79 des Handrades 72 ein und zeigt die Verschiebung und damit das druckmittelbewirkte Schalten des Schieberventils an. Durch entsprechende Drucksteuerung vermittels der Magnetventile 76 und/oder unterschiedliches Ausbilden der beiden Kolben 53 kann in bekannter Weise erreicht werden, daß wahlweise eine Mittel- oder eine rechte Endstellung eingestellt werden; bei Druckmittelentlastung der Kolben 53 bewirkt die rechtsseitige Feder 76 ein Rückstellen in die linksseitige Ausgangsstellung und die damit verbundene Schaltstellung des Schieberventils 10. Durch entsprechendes Umstellen der beidseitigen Federbaueinheiten 54 sind andersartige Funktionen für das Schieberventil einstellbar, beispielsweise wird bei beidseitiger Einstellung der mittleren Axialstellung der Kulissenhülse 71 eine monostabile Mittelstellung für die Kolben 53 und Zahnstange 72 erreicht, durch Druckmittelbeaufschlagung jeweils eines Kolbens 53 sind die Endstellungen einsteuerbar, und bei von der Darstellung nach Fig.2 ausgehender Verstellung nur der rechtsseitigen Federbaueinheit 54 in die rechtsseitige Endlage deren Kulissenhülse 71 ergibt sich eine indifferente Funktion, in welcher das Schieberventil in jeder eingestellten Schaltstellung verbleibt, wenn die Kolben 53 nicht druckmittelbeaufschlagt sind.

Selbstverständlich ist abweichend zur Ausführung nach Fig.2 das Schieberventil auch andersartig als durch die Federbaueinheiten 54 betätigbar, beispielsweise können anstelle dieser Federbaueinheiten 54 einfache Verschlußdeckel an das Gehäuse 25 angeflanscht werden oder es können anstelle der Kolben 53 elektromagnetische oder mechanische Verstellmittel üblicher Bauart zum Verstellen der Zahnstange 52 vorgesehen werden.

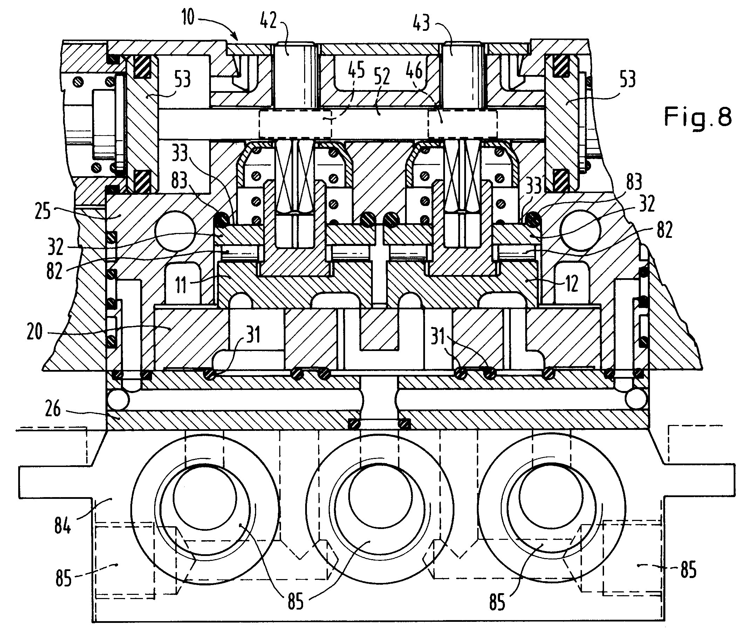

Beim Ausführungsbeispiel nach Fig.8 des Schieberventils ist zwischen die Druckplatte 32 und den Teildrehschieber 11 bzw. 12 jeweils ein Nadel-Axialwälzlager 82 mit radialen Nadeln eingeordnet, an den Nadeln kann teildrehschieberseitig jeweils in nicht dargestellter Weise ein metallischer Laufring anliegen, welcher seinerseits auf da Teildrehschieber 11 bzw. 12 aufliegt. Auch anstelle der Druckplatte 32 kann eine entsprechender Laufring vorgesehen sein. Durch das Nadel-Axialwälzlager 82 wird der Drehwiderstand beim Verstellen der Teildrehschieber 11 und 12 wesentlich gemindert, das Schieberventil benötigt geringere Schaltkräfte und die Kolben 53 können mit verringertem Durchmesser sowie die Federbaueinheiten 54 mit schwächeren Federn 76 ausgebildet werden.

Weiterhin sind gemäß Fig.8 zwischen die Ringschultern 33 und die Druckplatten 32 O-Ringe 83 eingeordnet, durch welche im Zusammenwirken mit den O-Ringen 31 die Elastizität der axialen Pressung zwischen den Teildrehschiebern 11 bzw. 12 und dem Schieberbahnteil 20 verstärkt wird. Ansonsten entspricht die Ausführung des Schieberventils nach Fig.8 dem Schieberventil 10, wie es vorstehend insbesondere im Zusammenhang mit Fig.2 beschrieben wurde. Die gegenüber Fig.2 vergrößerte Darstellung in Fig.8 erlaubt, feine Einzelheiten des Schieberventils gegenüber der Darstellung nach Fig.2 verbessert zu erkennen. In Fig.8 ist des weiteren ein Ventilträger 84 dargestellt, auf welchen das Schieberventil mit seiner Anschlußplatte 26 aufgeflanscht ist und welcher Anschlüsse 85 für Rohrleitungen aufweist, welche mit dem Schieberventil zu verbinden sind.

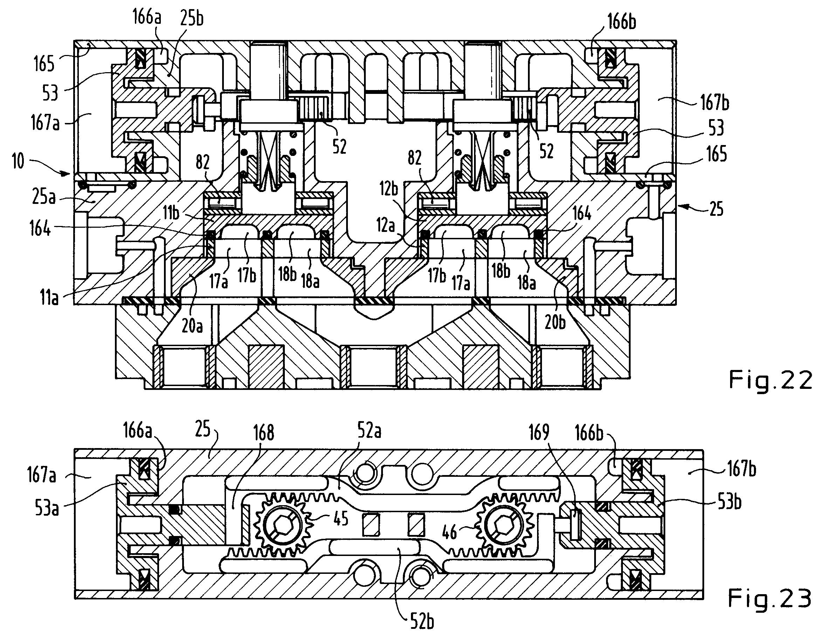

Die Fig.22 zeigt ein weiteres den vorstehend beschriebenen prinzipiell ähnliches Schieberventil 10. Bei der Ausführungsform nach Fig.22 ist die feststehende Schieberbahn in zwei Schieberbahnteile 20a und 20b aufgeteilt, die nebeneinander im Gehäuse 25 gelagert sind und mit ihren Randbereichen sich auch in Richtung zu den Teildrehschiebern gegen Schultern des Gehäuses 25 abstützen. die Teildrehschieber sind axial jeweils geteilt ausgeführt, sie bestehen aus jeweils einer vorzugsweise aus Kermik gefertigten Kreisscheibe 11a bzw. 12a, die anstelle der Teilringnuten mit achsparallelen Durchbrechungen 17a und 18a versehen sind. Die Kreisscheiben 11a und 12a sind relativ unverdrehbar mit sie drehantriebsseitig abdeckenden Stützscheiben 11b und 12b gekoppelt, wobei zwischen die Kreisscheiben 11a bzw. 12a und die Stützscheiben 11b bzw. 12b jeweils eine die Durchbrechungen 17a und 18a druckdicht umschließende Dichtung 164 eingeordnet ist. Die Stützscheiben 11b und 12b sind seitens der Kreisscheiben 11a und 12a mit an deren Durchbrechungen 17a und 18a anschließenden Teilringnuten 17b und 18b versehen, welche axial zur Drehantriebsseite hin verschlossen sind. Die in Aufsicht beispielsweise 8-artige Dichtung 164 besteht aus elastischem Werkstoff, sie ist derart zwischen die Kreisscheiben 11a bzw. 12a und Stützscheiben 11b bzw. 12b eingeordnet, daß sie unter Beibehalten der Dichtigkeit zumindest eine Toleranzmaßabweichungen aufnehmende, federnde Axial-Relativbeweglichkeit zwischen der Kreisscheibe 11a und deren Stützscheibe 11b bzw. der Kreisscheibe 12a und deren Stützscheibe 12b ermöglicht. Die Stützscheiben 11b und 12 sind drehantriebsseitig über Nadel-Axialwälzlager 82 oder dergleichen, wie zu Fig.8 beschrieben, gegen das Gehäuse 25 abgestützt und auch in den vorstehend beschriebenen Ausführungsbeispielen entsprechender Weise mit einem Drehantrieb gekoppelt.

Es ergibt sich somit eine praktisch vollständige Entlastung der Kreisscheiben 11a und 12a von axial wirkenden, pneumatischen Belastungen, insbesondere auch von stoßartigen bzw. dynamischen, derartigen Belastungen während Schaltvorgängen; diese Belastungen werden von den Stützscheiben 11b und 12b aufgenommen. Die erwähnte Entlastung der Kreisscheiben 11a und 12a ermöglicht, diese günstig aus einem ggf. gegen derartige Belastungen empfindlichen (Keramik-)Werkstoff zu fertigen.

Weiterhin zeigt die Fig.22 eine Zweiteilung des Gehäuses 25, welche in wesentlichen in der Ebene der Zahnstange 52 verläuft, wodurch vom Gehäuse-Grundkörper 25a ein mit diesem in nicht dargestellter Weise, beispielsweise Schrauben, fest zu verbindendes Gehäusedeckelteil 25b abtrennbar ist. Die Zylinderkörper 165 für die Kolben 53 werden dabei zweckmäßig im Gehäusedeckelteil 25b angeordnet. Durch diese Gehäuse-Zweiteilung werden die Herstellung und Montage des Schieber-Ventils 10 vereinfacht und verbilligt. Entsprechende Ausbildungen mit mehrteiligem Drehschieber und/oder geteiltem Gehäuse sind selbstverständlich auch bei abgewandelten Schieberventilen mit beispielsweise nur einem Drehschieber möglich.

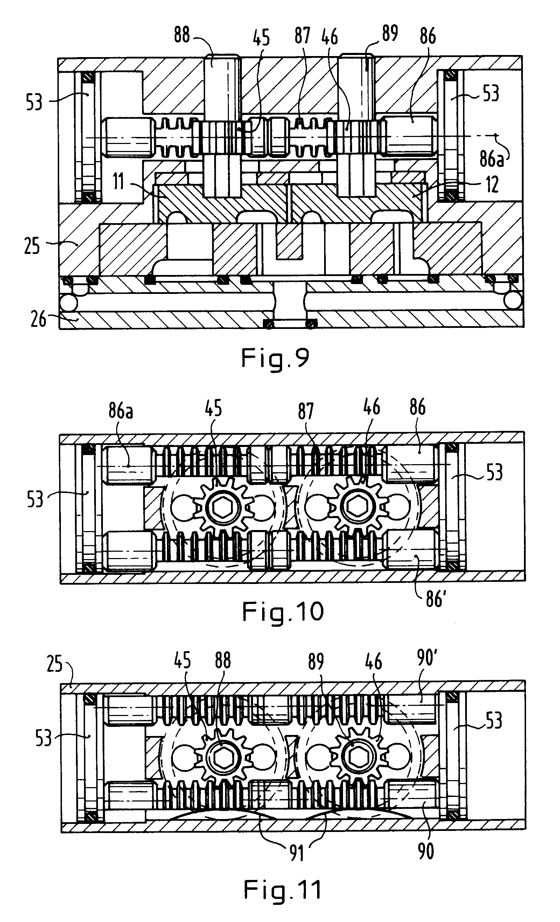

Die Figuren 9 und 10 zeigen ein Schieberventil, bei welchem der Drehantrieb für die Teildrehschieber 11 und 12 gegenüber den vorangehend beschriebenen Ausführungsbeispielen geändert ist. Hierbei liegen die beiden Kolben 53 unter Entfall des Teiles 49 und der Zahnstange 52 an einer zur einen Seite der beiden Zahnräder 45 und 46 verlaufenden Stange 86 an. Die Stange 86 ist um ihre Längsachse 86a willkürlich drehbar bzw. dreheinstellbar gelagert, sie trägt zumindest seitlich der Zahräder 45 und 46 nur über einen Teil ihres Umfanges eine radial auskragende Verzahnung 87, weist über einen anderen Teil ihres Umfanges jedoch eine glatte, zylindrische Oberfläche auf. Die Anordnung ist derart getroffen, daß in einer Drehstellung der als Zahnstange anzusprechenden Stange 86 deren Verzahnung 87 außer Eingriff zu den Zahnrädern 45 und 46 ist, wie es in Fig.9 und in der oberen Hälfte der Fig.10 dargestellt ist, und in einer anderen Drehstellung gemäß der unteren Hälfte der Fig.10 in Eingriff steht; es ist zu beachten, daß hierbei die in der unteren Hälfte der Fig.10 in der anderen Schaltstellung dargestellte Stange 86' lediglich zum Verdeutlichen dieser anderen Schaltstellung dargestellt ist, bei der tatsächlichen Schieberventilausführung jedoch fehlt. Die Zahräder 45 und 46 sind hierbei fest mit im Gehäuse 25 drehbar und axial unverschieblich gelagerten Antriebswellen 88 bzw. 89 verbunden, welche in geeignetem Dreheingriff zu den Teildrehschiebern 11 und 12 stehen. Die Antriebswellen 88 und 89 sind wie die Antriebswellen 42 und 43 vermittels eines geeigneten Drehwerkzeuges verdrehbar.

In der vorstehend ersterwähnten Drehstellung der Stange 86 ist diese von den Zahnrädern 45 und 46 entkuppelt, vermittels der Antriebswellen 88 und 89 sind die Teildrehschieber 11 und 12 in beliebige Drehstellungen einstellbar. Sodann kann die Stange 86 in ihre andere, in Fig.10 unten dargestellte Drehlage gemäß Stange 86' eingestellt werden, in welcher ihre Verzahnung 87 mit den Zahnrädern 45 und 46 kämmt. In dieser Schaltlage sind die Teildrehschieber 11 und 12 durch axiales Verschieben der Stange 86' vermittels der Kolben 53 gemeinsam und synchron drehbar, das Schieberventil kann somit geschaltet werden. Im übrigen entspricht der Aufbau des Schieberventils nach Fig.9 und 10 den vorangehenden Beschreibungen, so daß sich weitere Erläuterungen erübrigen.

Beim Ausführungsbeispiel nach Fig.11, dessen Darstellung derjenigen nach Fig.10 sehr ähnlich ist, befindet sich zur einen Seite der Zahnräder 45 und 46 eine Zahnstange 90, wie sie in der unteren Hälfte der Fig.11 dargestellt ist. Diese stirnseitig an den Kolben 53 anliegende Zahnstange 90 ist quer zu den Zahnrädern 45 und 46, also in der Zeichenebene der Fig.11, verschieblich im Gehäuse 25 gelagert, zwischen die den Zahnrädern 45 und 46 abgewandte Längsseite der Zahnstange 90 und das Gehäuse 25 sind blattfederartige Federn 91 eingespannt, welche die Zahnstange 90 in Richtung zu den Zahnrädern 45 und 46 belasten. Unter der Belastung durch die Federn 91 greift die Verzahnung der Zahnstange 90 in die Zahnräder 45 und 46 ein, wie es in der unteren Hälfte der Fig.11 dargestellt ist. Die in der oberen Hälfte der Fig.11 dargestellte Zahnstange 90' ist wegzudenken, sie stellt die Zahnstange 90 lediglich in einer anderen Schaltstellung dar. Die Zahnräder 45 und 46 sind wiederum wie zu Fig.9 beschrieben über Antriebswellen 88 und 89 mit den Teildrehschiebern 11 und 12 drehgekoppelt. Beim Verschieben der Kolben 53 und damit der Zahnstange 90 werden somit die Teildrehschieber 11 und 12 gemeinsam und synchron gedreht. Die Zahnstange 90 ist im Gehäuse 25 derart gelagert, daß sie manuell entgegen der Kraft der Federn 91 zur Seite, von den Zahnrädern 45 und 46 weg in die in Fig.11, obere Hälfte unter der Bezugszahl 90' dargestellte Schaltlage verschoben und in dieser Schaltlage gehalten werden kann. In dieser Schaltstellung ist die Zahnstange 90' von den Zahnrädern 45 und 46 ausgekoppelt, so daß vermittels der Antriebswellen 88 und 89 die Teildrehschieber 11 und 12 manuell beliebig dreheinstellbar sind und andererseits Axialverschiebungen der Kolben 53 und der Zahnstange 90' keine Drehverstellungen bewirken. Bei Rückkehr der Zahnstange aus ihrer Lage nach 90' in ihre Lage nach 90 kuppelt sie wieder in die Zahnräder 45 und 46 ein. Im übrigen entspricht auch hier der restliche Aufbau und die Funktionsweise des Schieberventils den vorstehenden Erläuterungen.

Der Drehantrieb des Schieberventils 10 kann auch gemäß Fig.23 ausgebildet werden. Gemäß Fig.23 kämmt jedes der beiden Zahnräder 45 und 46 auf einander gegenüberliegenden Seiten mit jeweils zwei Zahnstangen 52a und 52b, die zueinander parallel und längsverschieblich im Gehäuse 25 geführt sind. Die eine Zahnstange 52a ist an ihrem einen Ende, die andere Zahnstange 52b am anderen, entfernten Ende mit jeweils einem Kolben 53a bzw. 53b gekoppelt. Die beiden Kolben 53a und 53b sind zum Drehen der Zahnräder 45 und 46 entgegengesetzt druckbeaufschlagbar, so daß sie jeweils entgegengesetzte Verschiebungen erfahren und auf die Zahnstangen 52a und 52b übertragen; die Vorrichtungen zum Steuernn der Druckbeaufschlagungen entsprechen weitgehend bekannten, derartigen Vorrichtungen - es sind im wesentlichen nur die jeweils entgegengesetzt zu den Kolben 52a und 52b liegenden Beaufschlagungsräume, d.h. die Beaufschlagungsräume 166a und 166b bzw. 167a und 167b, miteinander zu verbinden und wie bisher üblich in ihrem Druck zu schalten - und sind daher nicht dargestellt. Die Zahnräder 45 und 46 erfahren hierdurch jeweils einen zweiseitigen Drehantrieb, wodurch die Verzahnungseingriffe und die Zahnradlagerungen bei Verdoppelung des Drehmomentes entlastet werden.

Die Koppelung der Kolben 53a bzw. 53b mit den Zahnstangen 52a bzw. 52b kann einfach, beispielsweise durch einen Querstift-Bohrungs-Eingriff 168, wie zwischen Kolben 53a und Zahnstange 52a dargestellt, oder durch einen T-Nut-Eingriff 169, wie zwischen Kolben 53b und Zahnstange 52b dargestellt, ausgebildet sein.

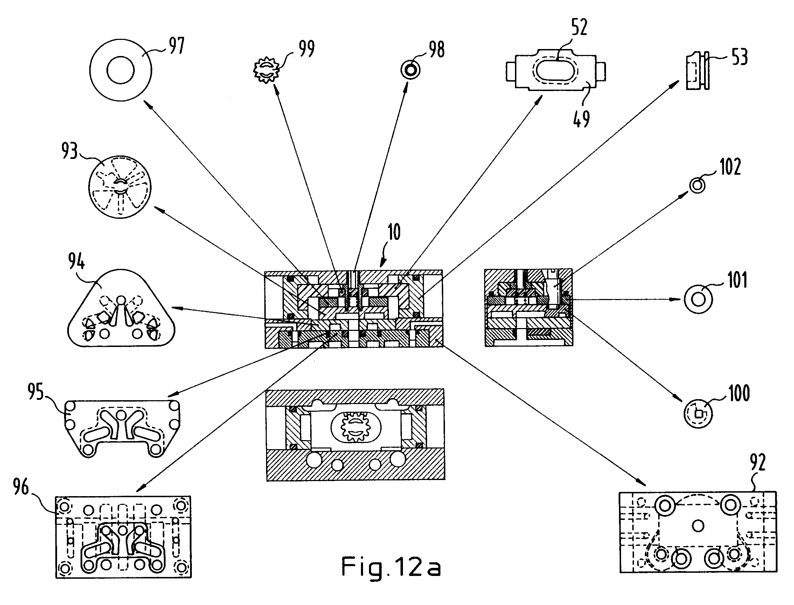

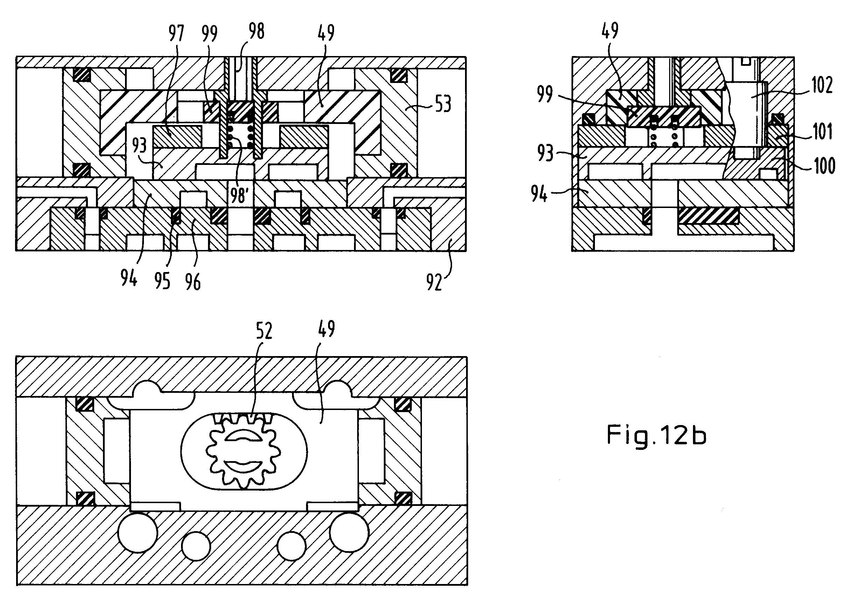

Beim Schieberventil nach den Figuren 12-14, insbesondere den Figuren 12a und 12b, ist im Gehäuse 92 nur ein kreisscheibenförmiger Drehschieber 93 vorgesehen und drehbar gelagert, er liegt mit seiner Schieberfläche auf einem im Gehäuse 92 gehalterten Schieberbahnteil 94 auf. Das Schieberbahnteil 94 ist im Gehäuse 92 unter Zwischenlage einer Dichtung 95 von einer an das Gehäuse 92 angeflanschten bzw. mit diesem verschraubten Anschlußplatte 96 gehalten. Auf der dem Schieberbahnteil 94 abgewandten Seite liegt auf dem Drehschieber 93 eine ringförmige Druckplatte 97 auf, welche ihrerseits axial gegen das Gehäuse 92 abgestützt ist; die in Achsrichtung des Drehschiebers 93 elastische Dichtung 95 vermag somit das Schieberbahnteil 94 und den Drehschiebe 93 elastisch gegeneinander zu spannen. Der Drehschieber 93 ist drehfest über eine Antriebswelle 98 mit einem ritzelartigen Zahnrad 99 gekoppelt, die Antriebswelle 98 ist in einem dem Drehschieber 93 zugewandten Abschnitt als geschlitzte Hülse ausgebildet, welche entsprechende Schlitze im Zahnrad 99 durchgreift. Das Zahnrad 99 ist somit drehfest, aber axial verschieblich auf der Antriebswelle 98 gehaltert. Eine im hülsenartigen Abschnitt der Antriebswelle 98 angeordnete Feder 98' (Fig.12b) hält das Zahrad 99 in einer oberen Endstellung, in welcher es mit einem den Teil 49 mit Zahnstange 52 der eingangs beschriebenen Ausführungsform entsprechenden Teil 49 in Eingriff steht. Durch Eingriff eines Drehwerkzeuges in eine unrunde Bohrung der Antriebswelle 98 ist das Zahnrad 99 entgegen seiner Federbelastung nach unten versetzbar, derart, daß es aus der Zahnstange 52 des Teiles 49 ausrastet, in der Funktion äquivalent zur zu Fig.2 beschriebenen Ausführungsform. Das Teil 49 ist beidseitig von je einem im Gehäuse 92 geführten Kolben 53 belastet. Weiterhin sind im Schieberventil nach Fig.12 a und b zwei justierbare Drosselstellen für zwei Luftführungskanäle, insbesondere die zu den Leitungsanschlüssen R und S führenden Druckmittelkanäle, integriert. Diese Drosselstellen sind ebenfalls drehschieberartig aufgebaut, sie weisen eine scheibenartige Drosselscheibe 100 auf, die mit einer Planfläche auf dem Schieberbahnteil 94 aufliegt und vermittels einer spiraligen, sich zum einen Ende hin verjüngenden Drosselausnehmung entsprechende Kanalmündungen im Schieberbahnteil 94 je nach Drehlage der Drosselscheibe 100 mehr oder weniger gedrosselt miteinander verbindet. Die Drosselscheibe 100 wird vermittels einer sich gegen das Gehäuse 92 abstützenden Druckscheibe 101 in ähnlicher Weise wie der Drehschieber 93 an das Schieberbahnteil 94 angedrückt, vermittels eines von außen einstellbaren Bolzens 102 ist die Drehlage der Drosselscheibe 100 einstellbar.

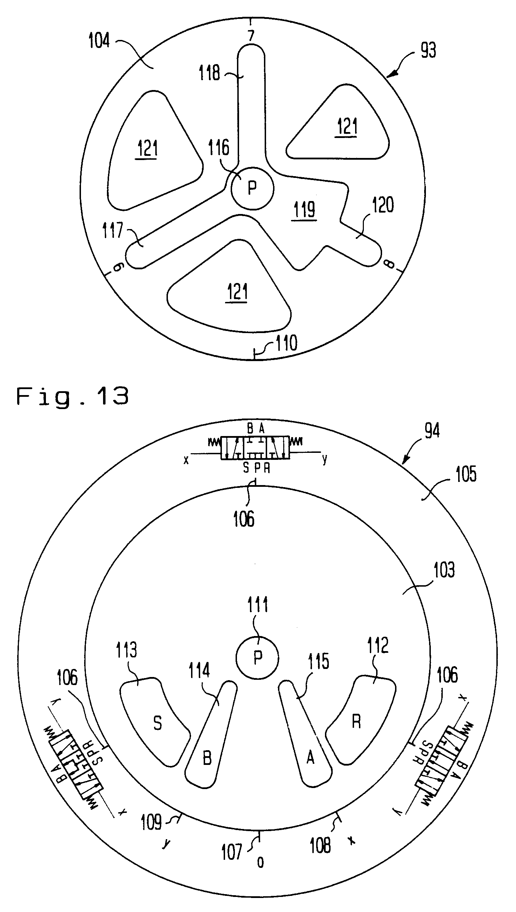

In Fig.13 sind die Schieberfläche 104 des Drehschiebers 93 und die Schieberbahn 103 des Schieberbahnteils 94 in wesentlich vergrößertem Maßstab dargestellt, wobei diese Teile derart konzipiert sind, daß das Schieberventil als 5/3-Wegeventil der 6er, 7er oder 8er Funktion gemäß den Teilbildern f,g oder h einstellbar ist. Die Schieberbahn 103 ist dabei in Aufweist, die Schieberfläche 164 in gleicher Blickrichtung, also durch den Drehschieber 93 hindurch gesehen dargestellt. Gemäß Fig.13 ist das Schieberbahnteil 94 mit einer kreisförmigen Schieberbahn 103 ausgestattet, auf welcher der Drehschieber 93 mit seiner in Fig.13 dargestellten Schieberfläche 104 drehbar aufliegt. Zum einfacheren Verständnis sind in einer die Schieberbahn 103 umgebenden Ringfläche 105 diese Schieberventil-Symbole zusammen mit einer an den Umfangskreis der Schieberbahn 103 angesetzten Strichmarkierung 106 dargestellt; an den Schieberventil-Symbolen sind die seitlichen Schaltstellungen jeweils durch x bzw. y markiert. Weiterhin zeigt die Ringfläche 105 eine O-Markierung 107 und seitlich zu dieser eine x-Markierung 108 sowie eine y-Markierung 109. Am Drehschieber 93 sind der 6er, 7er und 8er Funktion des Schieberventils entsprechend Umfangsmarkierungen 6,7 und 8 eingetragen sowie eine zusätzliche Strichmarkierung 110. Es ist selbstverständlich, daß die vorstehend erwähnten Markierungen mitsamt der Ringfläche 105 nicht tatsächlich auf dem Schieberbahnteil 94 bzw. dem Drehschieber 93 angebracht sind; es ist jedoch zweckmäßig der Ringfläche 105 entsprechende Markierungen am Gehäuse 2 in einer die Bohrung für die Antriebswelle 98 umgebenden Ringfläche und die zum Drehschieber 93 erwähnten Markierungen an der Stirnfläche der Antriebswelle 98 sichtbar anzubringen.

Gemäß Fig.13 weist die Schieberbahn 103 vier Kanalmündungen auf: Zentrisch befindet sich eine kreisförmige Mündung 111 für einen P-Druck führenden Druckmittelkanal und innerhalb etwa eines Halbkreises befinden sich zueinander zumindest annähernd symmetrisch zwei von den Halbkreisenden ausgehende, bogenartig gekrümmte Mündungen 112 und 113 für einen mit dem R- und einen mit dem S-Leitungsanschluß verbundenen Druckmittelkanal und zur Halbkreismitte schließen sich an diese Mündungen 112 und 113 zwei weitere, etwa kreisausschnitt- bzw. tortenstückartige, vor der zentrischen Mündung 111 endende Mündungen 114 und 115 für mit dem B- und dem A-Leitungsanschluß in Verbindung stehende Druckmittelkanäle an. Die O-Markierung 107 befindet sich etwa mittig zwischen den Mündungen 114 und 115. Die kreisförmige Schieberfläche 104 des Dehschiebers 93 ist im Winkel von jeweils 120° zueinander versetzt mit drei von einer zentralen Ausnehmung 116 ausgehenden, radialnutartigen Ausnehmungen 117,118 und 119 versehen, von welchen zwei Ausnehmungen 117 und 118 relativ schmal ausgebildet sind und die dritte Ausnehmung 119 zentral einen, bezogen auf die beiden anderen Ausnehmungen 117 und 118, etwa doppelt weiten Ansatz aufweist, der sich über etwa 2/3 ihrer Längserstreckung nach radialaußen erweitert und im restlichen, radial äußeren Drittel 120 ihrer Längserstreckung eine etwa den beiden anderen Ausnehmungen 117 und 118 entsprechende Weite aufweist. Zwischen den radialnutenartigen Ausnehmungen 117,118 und 119 befinden sich drei etwa dreieckige Ausnehmungen 121, deren der kreisförmigen Umfangsbegrenzungen der Schieberfläche 104 zugewandte Seite diesem Begrenzungskreis entsprechend gekrümmt sind. In die Mündungen 111-115 der Schieberbahn 103 sind die in diesen Mündungen jeweils anstehenden Drücke eingeschrieben, in der Schieberfläche 104 ist lediglich in der Ausnehmung 116 der in dieser stets herrschende P-Druck eingeschrieben. Die Ausnehmungen 117 und 118 ragen radial in Richtung zu der 6er bzw. 7er Markierung und die Ausnehmung 119 in Richtung zur 8er Markierung. Die Strichmarkierung 110 befindet sich etwa mittig zwischen der 6er und der 8er Markierung.

Zum Einstellen eines bestimmten Funktions-Verstellbereichs am Schieberventil nach den Figuren 12 und 13 ist bei unbetätigter Betätigungsvorrichtung, also in Mittelstellungen befindlichem Teil 49 und unbeaufschlagten Kolben 53, nach Auskuppeln des Zahnrades 99 von der Zahnstange 52 die Antriebswelle 98 derart zu drehen, daß die Strichmarkierung 110 zu einer der Strichmarkierungen 106 fluchtet, sodann ist das Zahnrad 99 wieder in die Zahnstange 52 einzurasten. Damit ist das Schieberventil auf die der jeweiligen Strichmarkierung 106 zugeordnete Funktionsweise eingestellt, es befindet sich in der mittleren Schaltstellung. Die O-Markierung 107 zeigt dabei auf eine der Markierungen 6,7 oder 8, die Zahl gibt die eingestellte 6er, 7er oder 8er Funktion wieder. Zum Betätigen des Schieberventils ist der Drehschieber 93 durch Druckbeaufschlagen eines der Kolben 53 und Verschieben der Zahnstange 52 zu drehen, bei Erreichen der gewünschten Schaltstellung gelangt die jeweilige Zahl-Markierung des Drehschiebers 93 in fluchtende Lage zur x- bzw. y-Markierung 108 bzw. 109 und zeigt damit die eingestellte x- bzw. y-Schaltstellung des Schieberventils an.

Die Ausnehmungen 116-121 weisen eine derartige Tiefe auf, daß sie den Drehschieber 93 nicht durchdringen, die Tiefe beträgt etwa die Hälfte bis 2/3 der axialen Stärke des Drehschiebers 93.

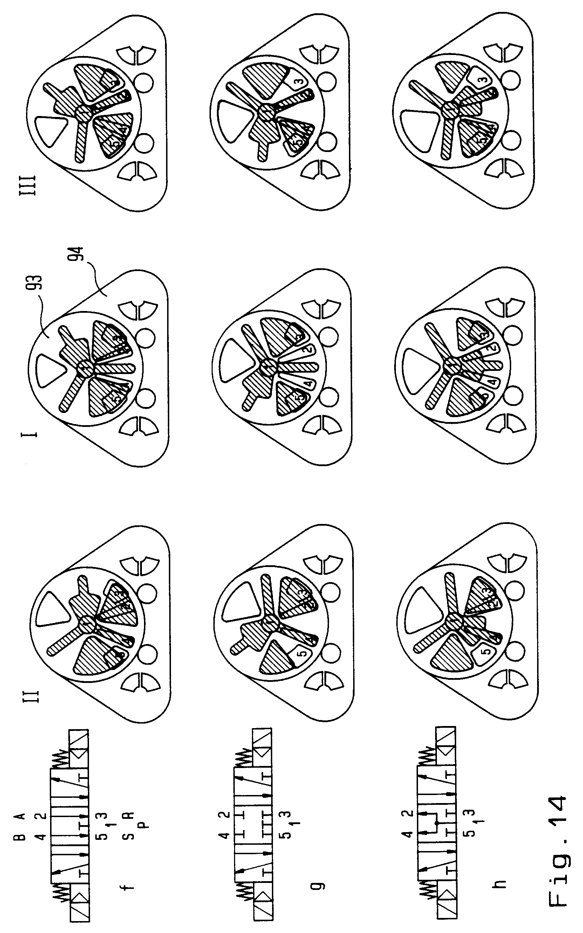

In Fig.14 sind in analoger Weise zu Fig.7 in horizontalen Zeilen nebeneinander die relativen Drehlagen von Drehschieber 93 und Schieberbahnteil 94 mitsamt deren Mündungen bzw. Ausnehmungen neben den links jeweils dargestellten Schieberventil-Symbolen dargestellt, die unbetätigte, Null- oder Mittelstellung ist dabei in der mittleren, senkrechten Reihe unter I, die dem linken Schaltbild der jeweiligen Symboldarstellung entsprechende Schaltstellung in einer senkrechten Reihe unter II und die dem rechten Symbolschaltbild entsprechende Schaltstellung in der Reihe unter III dargestellt; die Darstellungen nach II und III entsprechen somit der x- bzw. y-Schaltstellung gemäß Fig.13. Die jeweils wirksamen Ausnehmungen des Drehschiebers 93 sind in Fig.14 schraffiert. In Fig.14 sind die Zahlen-Codes für die Leitungsanschlüsse eingezeichnet, zur leichteren Übertragung auf den Buchstaben-Code sind im obersten Symbolbild zusätzlich diese Buchstaben-Code angegeben. Aus Fig.14 sind die Schaltvorgänge des Schieberventils für jede Schaltstellung in jeder seiner möglichen Funktionsweisen ohne weiteres ersichtlich, so daß sich weitere Erläuterungen erübrigen. Es ist erwähnenswert, daß einige der Ausnehmungen 117-121 des Dehschiebers 93 in mehreren der drei einstellbaren Funktions-Verstellbereichen des Schieberventils genutzt werden, daß also nicht für jeden einstellbaren Funktions-Verstellbereich eine gesonderte Gruppe von Ausnehmungen im Drehschieber 93 erforderlich ist. In einzelnen Schaltstellungen überschneiden sich somit die Funktions-Verstellbereiche.

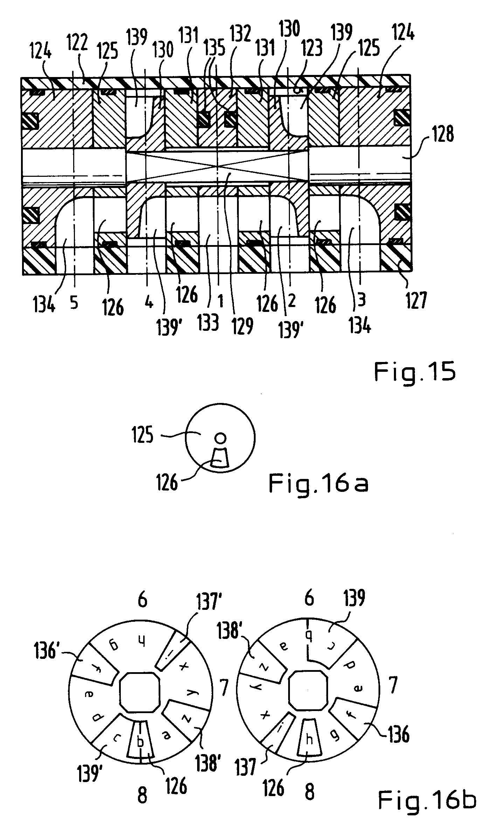

Eine weitere Ausführungsmöglichkeit des Schieberventils ist in den Figuren 15-18 aufgezeigt. Gemäß Fig.15 weist das Schieberventil ein Gehäuse 122 mit einer durchgehenden, zylindrischen Bohrung 123 auf, welche beidendig durch dicht eingesetzte Kappen 124 verschlossen ist. An die Kappen 124 schließt sich nach axialinnen jeweils eine als Schieberbahnteil 125 ausgebildete Scheibe an, welche ebenfalls dicht und undrehbar in der Bohrung 123 gehaltert ist. Die Schieberbahnteile 125 sind gleichartig ausgebildet, sie weisen außermittig eine etwa trapezartige Durchbrechung 126 auf, wie es aus der verkleinerten Darstellung in Fig.16a ersichtlich ist. In der Darstellung der Fig.15 befindet sich die Durchbrechung 126 unmittelbar benachbart zum unten dargestellten Wandungsabschnitt 127 des Gehäuses 122, welcher von den Leitungsanschlüssen 1-5 (wie sie vorstehend bereits mehrmals erläutert wurden) durchbrochen ist. Die Kappen 124 sowie die Schieberbahnteile 125 sind drehbar von einer Welle 128 durchsetzt, welche seitlich einer der Kappen 124 mit einem nicht dargestellten Drehantrieb zum Einstellen bestimmter Drehlagen dieser Welle 128 gekoppelt ist; beispielsweise kann die Welle 128 dort mit einem nicht selbsthemmenden Schraubantrieb versehen sein, dessen Mutter von einem in unterschiedliche Axiallagen einsteuerbaren Kolben axial bewegbar ist. Auf der Welle 128 sind relativ unverdrehbar, nach dem gezeichneten Ausführungsbeispiel vermittels eines Vierkant-Abschnittes 129 dieser Welle 128, zwei gleichartige Teildrehschieber 130 in zueinander spiegelbildlicher Lage in axialer Anlage an die erwähnte Schieberbahnteile 125 gehaltert; die beiden Drehschieber 130 sind in der Bohrung 123 drehbar, sie können einen etwas kleineren Durchmesser als diese aufweisen, müssen jedoch die radialäußere Begrenzung der Durchbrechungen 126 nach radialaußen überschneiden. Axialinnen schließen sich an die beiden Teildrehschieber 130 zwei weitere Schieberbahnteile 131 an, welche völlig gleichartig zu den Schieberbahnteilen 125 gestaltet und ebenfalls undrehbar und abgedichtet in der Bohrung 123 gehaltert sind. Zwischen die beiden Schieberbahnteile 131 ist ein Abstandring 132 eingeordnet, welcher eine im wesentlichen den Durchbrechungen 126 entsprechende, jedoch bis zur radialen Außenbegrenzung des Abstandsringes 132 reichende Durchbrechung 133 aufweist. Die Schieberbahnteile 125 und 131 sind auf ihren den Drehschiebern 130 zugewandten Seiten als Schieberbahnen ausgebildet, die Teildrehschieber 130 sind dementsprechend beidseitig mit später im einzelnen zu beschreibenden Schieberflächen zu versehen. Die den Wandungsabschnitt 127 durchbrechenden Leitungsanschlüsse 1,2 und 4 weisen eine Breite auf, die der axialen Stärke des Abstandsringes 132 bzw. der Teildrehschieber 130 entspricht, sie münden radial fluchtend zu diesen in die Bohrung 123 ein. Die Leitungsanschlüsse 3 und 5 sind nach axialaußen zu den Schieberbahnteilen 125 versetzt angeordnet, die Kappen 124 sind mit Ausnehmungen 134 versehen, welche die Leitungsanschlüsse 3 und 5 mit den Durchbrechungen 126 der benachbarten Schieberbahnteile 125 verbinden. Zwischen den Abstandsring 235 und die beiden benachbarten Schieberbahnteile 133 sind vorzugsweise O-ringartige Gummiteile 135 eingeordnet, welche die in der Bohrung 123 befindlichen Teile axial elastisch gegeneinander verspannen und somit die Schieberflächen gegen die Schieberbahnen andrücken.

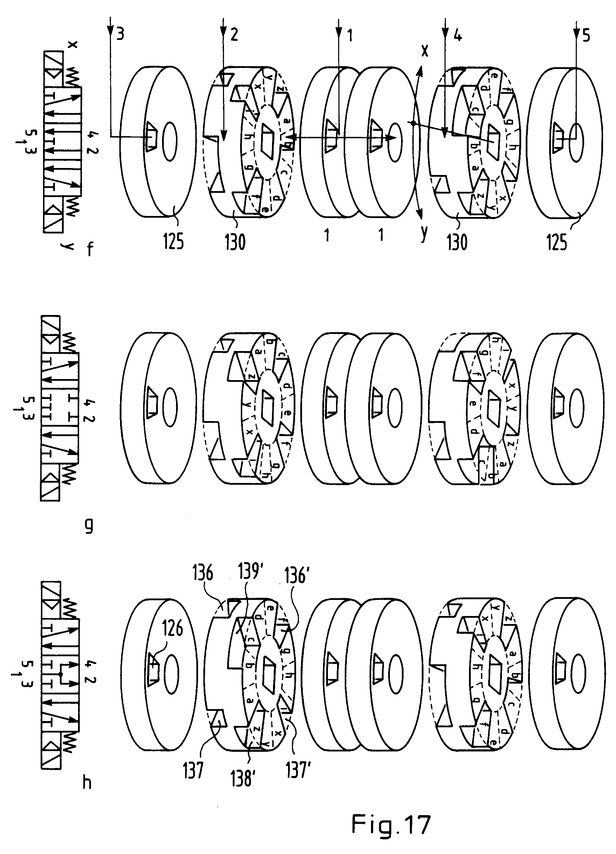

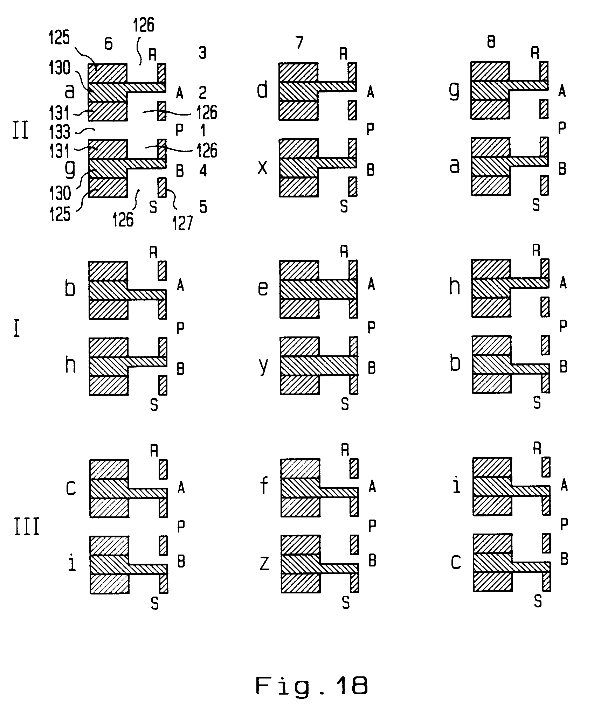

In Fig.16b sind Vorder- und Rückseite der Teildrehschieber 130 jeweils in Aufsicht, also in entgegengesetzten Blickrichtungen, dargestellt, zugleich sind an den Umfang um jeweils 90° zueinander versetzt die Zahlen 6,7 und 8 angeschrieben, welche jeweils die Lage, die die Teildrehschieber 130 bei Einstellung der 6er, 7er oder 8er Funktion in der mittleren Schaltstellung einnehmen, angeben, weiterhin sind über gleichmäßige Drehwinkel verteilt in die Schieberflächen die Buchstaben a-i und x,y und z zum Erleichtern der Orientierung eingeschrieben. Gemäß dem rechten Teilbild der Fig.16b sind beide Teildrehschieber 130 zur einen Seite mit vier radialen Nuten 136,137, 138 und 139 versehen, deren Tiefe, wie aus Fig.15 ersichtlich, bis etwa zur radialen Mittelebene der Teildrehschieber reicht. Die Nut 136 befindet sich im Drehwinkelbereich f, sie erstreckt sich über einen Drehwinkel von ca 30°. Im Bereich i befindet sich die Nut 137, welche wesentlich schmäler als die Nut 136 ist. Im Bereich z befindet sich die Nut 138, deren Breite etwa der Nut 136 entspricht. Die Nut 139 findet sich im Bereich c und einem Teil des Bereiches b, sie ist breiter als die Nut 136. Alle Nuten 136 bis 139 sind nach radialinnen geschlossen und nach radialaußen offen. Das linke Teilbild der Fig.16b zeigt, daß die Teildrehschieber 130 anderseitig mit zu den beschriebenenen völlig gleichartigen Nuten 136'-139' versehen sind, welche jedoch in der Darstellung nach Fig.16b (entgegengesetzte Blickrichtungen) in einer um 180° gedrehten Lage angeordnet sind. In beide Teilbilder der Fig.16b ist jeweils unten im Bereich h bzw. b die Mündung einer Durchbrechung 126 eingezeichnet. Aus Fig.15 ist ersichtlich, daß die beiden Teildrehschieber 130 spiegelbildlich zueinander angeordnet sind, wobei jeweils die Nut 139' radialaußen in die Leitungsanschlüsse 2 bzw. 4 und seitens der Drehschieberbahnteile 131 in deren Ausnehmung 126 mündet. Aus den aus Fig.15 ersichtlichen Leitungsanschluß-Verbindungen bzw. -Absperrungen ist ersichtlich, daß sich das Drehschieberventil hier in der Mittelstellung der 8er Funktion gemäß Teilbild h der Fig.1 befindet. In Fig.17 sind nochmals seitlich neben jedem Symbolbild der 6er, 7er und 8er Funktion eines 5/3-Wegeventils die Schieberbahnteilteile 125 und 131 sowie die Teildrehschieber 130 in perspektivischer Darstellung in denjenigen Drehlagen der Teildrehschieber 130 gezeigt, welche letztere beim Einstellen des jeweiligen Funktions-Verstellbereiches in der mittleren Schaltstellung einnehmen; zur 6er Funktion im obersten Teilbild sind zusätzlich die Lagen der Leitungsanschlüsse 1-5 schematisch angegeben und im unteren Teilbild zur 8er Funktion sind an einem Teildrehschieber 130 die sichtbaren Nuten mit Bezugszahlen versehen. Zum Übergang von einem Funktion-Verstellbereich zum nächsten ist jeweils eine Drehung der Teildrehschieber 130 und damit der Welle 128 um 90° erforderlich, diese Verstellung kann relativ zum vorerwähnten Drehantrieb ähnlich den vergleichbaren Verstellungen bei den vorbeschriebenen Schieberventilen, aber auch durch eine entsprechende Drehung des Drehantriebes selbst mitsamt der mit diesem gekoppelten Welle 128 erfolgen. Zum Einstellen der jeweils linken bzw. rechten Schaltstellung gemäß Symboldarstellung sind die Teildrehschieber 130 vermittels des erwähnten Drehantriebes und der Welle 128 um jeweils ca 30° nach links oder rechts zu drehen. Aus Fig.18 sind die hierbei sich ergebenden Verbindung bzw. Absperrungen ersichtlich:

In Fig.18 ist das Schieberventil mit senkrechter Achsrichtung in seinen für die Schaltvorgänge wesentlichen Teilen bzw. Abschnitten dargestellt, die Schieberventilachse, also Achse der Welle 128, befindet sich dabei linksseitig an jedem Teilbild der Fig.18. In den senkrechten Reihen der Fig.18 sind die eingestellten Funktionsweisen nach der 6er, 7er und 8er Funktion und in den horizontalen Zeilen I,II und III die jeweils mittlere bzw. die beiden seitlichen Schaltstellungen gezeigt. Mit den angeschriebenen Kleinbuchstaben sind die entsprechenden, zwischen die Drehschieberbahnteile 125 und 131 im Bereich der Durchbrechungen 126 eingestellten Drehbereiche der Teildrehschieber 130 bezeichnet, die Großbuchstaben bezeichnen die Lage der entsprechenden Leitungsanschlüsse, sie sind zusätzlich durch die Zahlenangaben 1-5 ergänzt. Aus der im Vergleich zur Fig.7 leicht abgewandelten, der hier vorliegenden Schieberventilkonstruktion angepaßten Darstellungsweise der Fig.18 sind alle Schaltstellungen in den Funktions-Verstellbereichen des Schieberventils klar ersichtlich, weitere Erläuterungen hierzu erübrigen sich daher.

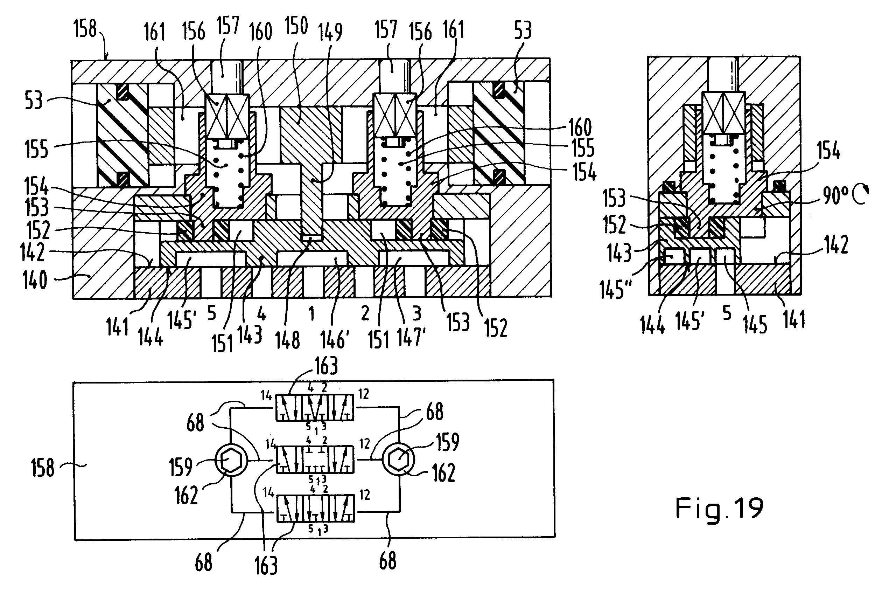

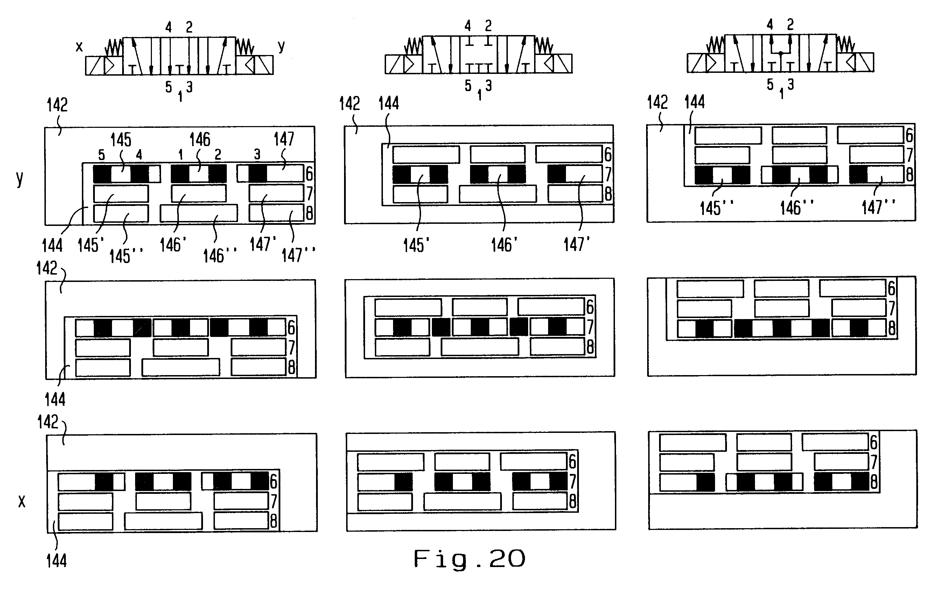

Die Figuren 19 und 20 verdeutlichen eine weitere Ausführungsmöglichkeit für ein nach der Erfindung ausgebildetes Schieberventil, im Ausführungsbeispiel ist es als 5/3-Wege-Schieberventil mit wahlweise einstellbarer 6er, 7er oder 8er Funktion gemäß den Teilbildern f,e oder h der Fig.1 ausgebildet. Gemäß Fig.19 weist das Schieberventil ein Gehäuse 140 auf, in welchem ein Schieberbahnteil 141 fest gehaltert ist. Das Schieberbahnteil 141 ist längs seiner Mittellängsachse mit fünf gleichmäßig angeordneten Durchbrechungen versehen, welche von links beginnend mit den bereits vorstehend mehrmals erwähnten Leitungsanschlüssen 5,4,1,2 und 3 entsprechend den Leitungsanschlußbezeichnungen S,B,P,A und R korrespondieren. Dem Gehäuseinneren zugewandt münden diese Durchbrechungen des Schieberbahnteils 141 in einer ebenen Schieberbahn 142, auf welcher ein Schieber 143 längsverschieblich ist. Der Schieber 143 ist schmäler als das Schieberbahnteil 141 ausgebildet, er ist daher auch quer zu seiner Längsrichtung auf diesem verstellbar. Der Schieber 143 weist auf seiner der Schieberbahn 142 zugewandten Schieberfläche 144 drei Reihen von jeweils drei nutenartigen, rechteckigen Ausnehmungen 145,146 und 147 für die erste Reihe, 145',146' und 147' für die zweite, mittlere Reihe und 145'', 146'' und 147'' für die dritte Reihe auf, die Reihen sind in Querrichtung des Schiebers 143 nebeneinander angeordnet und erstrecken sich in dessen Längsrichtung über jeweils die gleiche Länge. Durch Querverschieben des Schiebers 143 ist jeweils eine der drei Reihen in Deckung mit der Reihe von Mündungen in der Schieberbahn 142 bringbar.

Aus Fig.20 ist die Anordnung der in der Schiebenbahn 142 liegenden Mündungen der Durchbrechungen des Schieberbahnteis 141 sowie der Ausnehmungen 145-147'' entnehmbar: Die Mündungen der Durchbrechungen sind schraffiert dargestellt und der zugeordnete Leitungsanschluß 1-5 ist jeweils eingeschrieben, zum klareren Erkennen sind in einem der Teilbilder die Leitungsanschlüße 1-5 nochmals neben den Mündungen angegeben; auf der Schieberbahn 142 ist die Schieberfläche 144 mit den drei Reihen der Ausnehmungen 145-147'' eingezeichnet, die Reihen sind dabei rechtsbündig mit den Zahlen 6,7 und 8 entsprechend der 6er, 7er und 8er Funktion des Schieberventils bezeichnet. Jede Reihe 6,7 und 8 von Ausnehmnungen 145-147'' entspricht somit einem Funktions-Verstellbereich des in drei solche Verstellbereiche einstellbaren Schieberventil nach Fig.19 und 20. Der Fig.20 ist entnehmbar, daß der Abstand der voneinander entferntesten Ausnehmungs-Enden in den drei Ausnehmungs-Reihen 6,7 und 8 jeweils gleich ist und diese Ausnehmungs-Enden sich in Querrichtung in einer Linie nebeneinander befinden. In der mittleren, der 7er Funktion entsprechenden Reihe weisen die drei Ausnehmungen 145',146' und 147' gleiche Länge auf und befinden sich in einem etwa der Hälfte ihrer Länge entsprechenden Abstand voneinander. In der zweiten, oben dargestellten Reihe zur 6er-Funktion sind die beiden seitlichen Ausnehmungen 145 und 147 unter Verkürzen der Abstände verlängert, die mittlere Ausnehmung 146 entspricht in ihrer Länge der Ausnehmung 146'. In der dritten, unteren Reihe, welche der 8er-Funktion entspricht, ist die mittlere Ausnehmung 146'' bei ebenfalls verkürzten Abständen zu den beiden seitlichen Ausnehmungen 145'' und 147'' verlängert, die beiden seitlichen Ausnehmungen 145'' und 147'' entsprechen in ihren Längen den Ausnehmungen 145' und 147'. Die Längen der Ausnehmungen sind dabei derart bemessen, daß die Ausnehmungen 146,145' und 145'', 146' sowie 147' und 147'' gerade jeweils zwei Mündungen der Schieberbahn 142 zu überdecken und miteinander zu verbinden vermögen, wie es im linken oberen, mit den Bezugszahlen versehenen Teilbild der Fig.20 für die Ausnehmung 146 und die Mündungen für die Leitungsanschlüsse 1 und 2 ersichtlich ist. Aus diesem Teilbild ist desweiteren ersichtlich, daß entsprechend dem darüber dargestellten Symbolbild der 6er-Funktion die obere, 6er-Reihe mit den Ausnehmungen 145,146 und 147 wirksam ist und, wie bereits erwähnt, die Mündungen korrespondierend mit den Leitungsanschlüssen 1 und 2 durch die Ausnehmung 146 sowie die Mündungen korrespondierend mit den Leitungsanschlüssen 4 und 5 durch die Ausnehmung 145 jeweils miteinander verbunden sind und durch die Ausnehmung 147 die mit dem Leitungsanschluß 3 korrespondierende Mündung von weiteren Verbindungen abgesperrt ist. Damit entspricht dieses obere Teilbild in der linken, senkrechten Reihe der Fig.20 der rechten y-Schaltstellung des darüber dargestellten Symbolbildes. Es ist ohne weiteres erkennbar, daß bei Verschieben der Schieberfläche 144 in eine mittlere Längslage, bezogen auf die Schieberbahn 142, eine Schaltstellung gemäß dem mittleren Teilbild in der linken, senkrechten Reihe erreicht wird, welches der Mittelstellung des Symbolbildes entspricht. Im unteren Teilbild der linken Reihe der Fig.20 befindet sich die Schieberfläche 144 in der linken Endstellung, bezogen auf die Schieberbahn 142, die Ausnehmungen 145,146 und 147 verbinden hierbei die den Leitungsanschlüssen 1-5 entsprechenden Mündungen entsprechend dem linken x-Schaltbild des zugehörigen Symbolbildes. Durch Querverschieben des Schiebers 143 mitsamt seiner Schieberfläche 144 wird die Reihe der Ausnehmungen 145',146' und 147' für die 7er Funktion in Deckung mit den Mündungen der Schieberbahn 142 gebracht, wie es in der mittleren, senkrechten Reihe für die drei Schaltstellungen entsprechend dem darüber dargestellten Symbolbild dargestellt ist. Bei weiterem, seitlichem Verschieben werden die Ausnehmungen 145'',146'' und 147'' der unteren Ausnehmungs-Reihe für die 8er Schieberventilfunktion in Deckung zu den erwähnten Mündungen gebracht, in der senkrechten Einzelbild-Reihe der Fig.20 sind wiederum die drei Schaltstellungen entsprechend dem darüber dargestellten Symbolbild für ein 8er-Schieberventil gezeigt.

Zum Längsverstellen des Schiebers 143 weist dieser gemäß Fig.19 auf seiner der Schieberfläche 144 gegenüberliegenden Seite eine Quernut 148 auf, in welche ein quer auskragender Finger 149 einer Kolbenstange 150 querverschieblich eingreift. Die Kolbenstange 150 ist von den beiden an ihren Enden anliegenden Kolben 53 bewegbar, wie es vorstehend zu anderen Schiebenventil-Ausführungen bereits beschrieben wurde. Zum Querverschieben des Schiebers 143 relativ zum Schieberbahnteil 141 ist der Schieber 143 auf seiten seiner Quernut 148 in seinen Endbereichen mit je einer Längsnut 151 versehen, in welche vermittels eines Gleitsteines 152 je ein Exzenterfinger 153 einer Stellhülse 154 eingreift. Die beiden Stellhülsen 154 sind im Gehäuse 140 mit zur Schieberbahn 142 rechtwinklig verlaufender Achse drehbar gelagert, sie weisen jeweils eine Vierkantbohrung 155 auf, in welche ein entsprechender Vierkantabschnitt 156 einer Verstellwelle 157 undrehbar, aber axial verschieblich eingreift. Die Verstellwellen 157 enden in der oberen Deckfläche 158 des Schieberventils, sie sind dort mit Sechskantausnehmungen 159 entsprechend den Ausnehmungen 44 des Schieberventils 10 gemäß den Figuren 4 und 5 zum Ansetzen eines Imbusschlüssels versehen. Oberhalb der Stellhülsen 154 ist das Gehäuse 140 mit Vierkantausnehmungen geringer Tiefe versehen, welche den Vierkantabschnitten 156 entsprechen und in welche diese Vierkantabschnitte 156 eintreten können, wodurch die Stellhülsen 154 relativ undrehbar zum Gehäuse 140 gehaltert werden. Die Verstellwellen 157 sind von Federn 160 in Verschieberichtung zum Eingriff in das Gehäuse 140 belastet. Die Kolbenstange 150 ist mit zwei langlochartigen Ausnehmungen 161 versehen, welche von den Stellhülsen 154 und Verstellwellen 157 derart durchgriffen werden, daß die Längsverschiebungen der Kolbenstange 150 nicht behindert sind.

Die Verstellwellen 157 sind stirnseitig mit Markierungen 162 und die Deckfläche 158 des Schieberventils ist mit Schieberventilsymbolen 163 versehen, entsprechend den Markierungen 65 bzw. 66 und Schieberventilsymbolen 67 gemäß Fig.5; die Schieberventilsymbole 163 entsprechen 5/3-Wegeventilen der 6er, 7er und 8er Funktion und von ihnen führen entsprechend zu Fig.5 Linien 68 zum Umfang der die Verstellwellen 157 aufnehmenden Gehäusebohrungen. Die Linien 68 und Markierungen 162 sind derart angeordnet, daß bei fluchtender Lage die dem zugeordneten Schieberventilsymbol entsprechende Funktion des Schieberventils eingestellt ist. Durch Niederdrücken der Verstellwellen 157 entgegen der Kraft der Federn 160 vermittels in die Sechskantausnehmungen 159 eingeführter Imbusschlüssel werden die Vierkantabschnitte 156 vom Gehäuse 140 ausgerastet, durch nachfolgendes Verdrehen kann die gewünschte Funktion unter Querverschieben des Schiebers 143 eingestellt werden, und sodann werden durch Freigeben der Verstellwellen 157 diese durch Hochdrücken vermittels der Federn 160 wieder zum Gehäuse 140 drehverriegelt.

In Fig.19 ist am rechts dargestellten Querschnitt die Stellhülse 154 relativ zur Lage im linken Längsschnitt um 190° verdreht dargestellt, der Schieber 143 befindet sich dabei in der linken Quer-Endstellung, während er sich seim Längsschnitt in seiner queren Mittellage befindet.

Das Schieberventil nach Fig.19 kann vermittels einer nicht dargestellten Anschlußplatte ähnlich der Anschlußplatte 26 nach Fig.2 mit seinen Anschlußleitungen verbunden werden. Die außen liegenden Beaufschlagungsräume für die Kolben 53 sind zu verschließen und in ihrem Druck durch bekannte Schaltmittel zu steuern, es können auch Federbaueinheiten 54 gemäß Fig.21 an das Gehäuse 140 angeflanscht werden. Der Schieber 143 ist mit seiner Schieberfläche 144 federnd an die Schieberbahn 142 des Schieberbahnteiles 141 anzdrücken, hierzu kann eine nicht dargestellte Federbelastung des Schiebers 143 und/oder des Schieberbahnteiles 141 vorgesehen werden, beispielsweise vermittels O-Ringen entsprechend den O-Ringen 31 der Fig.2 und/oder O-Ringen 83 der Fig.8.

Eine weitere Ausführungsmöglichkeit eines der Erfindung entsprechenden Schieberventils besteht darin, daß der Schieber zylindrisch ausgebildet wird und an seiner Umfangsfläche zumindest zwei in Umfangsrichtung zueinander versetzte, teilzylindrische Funktions-Verstellbereiche aufweist. Die Schieberbahn ist entsprechend teilzylindrisch auszubilden. Vermittels einer Betätigungseinrichtung ist der Schieber zum Einstellen der je Funktions-Verstellbereich wenigstens zwei unterschiedlichen Schaltstellungen relativ zur Schieberbahn axial zu verstellen und vermittels der Stellvorrichtung zum Einstellen des jeweils wirksamen Funktions-Verstellbereiches um seine Achse zu drehen.

Bei den vorstehend beschriebenen Schieberventil-Ausführungen ist es natürlich möglich, durch entsprechende Ausbildung von Schieberbahn und Schieberfläche weniger oder mehr Funktions-Verstellbereiche als jeweils beschrieben vorzusehen. Bei allen Ausführungen ist es zweckmäßig, sowohl den Schieber wie das Schieberbahnteil bzw. die Schieberbahnteile aus Keramikwerkstoff zu fertigen. Auch eine gegebenenfalls zum Belasten des Schiebers bzw. Schieberteils vorgesehene Druckplatte kann vorzugsweise aus Keramikwerkstoff gefertigt werden, zum Vermindern von die erforderlichen Betätigskräfte steigernden Reibungswiderständen kann die Schieberbelastung über Wälzlager erfolgen.

In Abweichung zu den vorstehend beschriebenen Ausbildungsmöglichkeiten des Schieberventils ist es auch möglich, den jeweils wirksamen Funktion-Verstellbereich des Schieberventils nicht durch entsprechende Verstellung des Schiebers, sondern durch zusätzliches oder alleiniges Verstellen des Schieberbahnteiles relativ zum Ventilgehäuse zu bewirken.

Kurzfassung:

Das Schieberventil weist ein zum Gehäuse (140) festes Schieberbahnteil (141) mit einer Schieberbahn (142) auf, gegen welche ein Schieber (143) mit seiner Schiebefläche (144) beweglich ist. Die Schieberbahn (142) und die Schieberfläche (144) sind derart ausgebildet, daß nicht nur unterschiedliche Schieberventil-Schaltstellungen, sondern zusätzlich auch unterschiedliche Schieberventil-Funktionen einstellbar sind: Der Schieber (143) ist hierzu, zum Einstellen eines bestimmten von mehreren möglichen Funktions-Verstellbereichen, in besonderer Art zu verstellen, beispielsweise können bei einem Planschieber in dessen Schieberfläche quer nebeneinander mehrer Reihen (145,145',145'') von Ausnehmungen (145',146',147') eingearbeitet sein, deren jede Reihe durch Querverschieben des Schiebers (143) in eine Wirkstellung gebracht werden kann, während die anderen Reihen unwirksam sind; die wirksame Reihe bestimmt dabei die Funktionsart des Schieberventils.

**Bezugszeichenliste**

10
Schieberventil
11
Teildrehschieber
11a
Kreisscheibe
11b
Stützscheibe
12
Teildrehschieber
12a
Kreisscheibe
12b
Stützscheibe
13
Achse
14

Achse
15
Schieberbahn
16
Schieberbahn
17
Teilringnut
17a
Durchbrechung
17b
Teilringnut
18
Teilringnut
18a
Durchbrechung
18b
Teilringnut
19
Planfläche
20
Schieberbahnteil
20a
Schieberbahnteil
20b
Schieberbahnteil
21
Stirnfläche
22
Druckmittelkanal
23
Druckmittelkanal
24
Druckmittelkanal
25
Gehäuse
25a
Gehäuse-Grundkörper
25b
Gehäusedeckelteil
26
Anschlußplatte
27
Querkanal
28
Druckmittelkanal
29
Flanschfläche
30
O-Ring
31
O-Ring
32
Druckplatte
33
Ringschulter
34
Radialnut
35

Aussparung
36
Ansatz
37
Mitnehmerhülse
38
Ringflansche
39
Sackbohrung
41
Vierkantansatz
42
Antriebswelle
43
Antriebswelle
44
Ausnehmung
45
Zahnrad
46
Zahnrad
47
Federteller
48
Feder
49
Teil
50
Ausnehmung
51
Verbindungsgerade
52
Zahnstange
52a
Zahnstange
52b
Zahnstange
53
Kolben
53a
Kolben
53b
Kolben
54
Federbaueinheit
55
Zweigkanal
56
Magnetventil
57
Schieberfläche
58
Steg
59
Steg
60
Nutfortsatz
61

Mündung 62
Mündung 63
Mündung 64
Verbindungsgerade 65
Markierung 66
Markierung 67
Schieberventilsymbol 68
Linie 69
Gehäuse 70
O-Ring 71
Kulissenhülse 72
Handrad 73
Nocken 74
Zuganker 75
Federteller 76
Feder 77
Ringschulter 78
Abschnitt 79
Abschnitt 80
Markierung 81
Einstellungssymbol 82
Nadel-Axialwälzlager 83
O-Ring 84
Ventilträger 85
Anschluß 86,86'
Stange 86a
Achse 87
Verzahnung 88
Antriebswelle 89

Antriebswelle 90,90'
Zahnstange 91
Feder 92
Gehäuse 93
Drehschieber 94
Schieberbahnteil 95
Dichtung 96
Anschlußplatte 97
Druckplatte 98
Antriebswelle 98'
Feder 99
Zahnrad 100
Drosselscheibe 101
Druckscheibe 102
Bolzen 103
Schieberbahn 104
Schieberfläche 105
Ringfläche 106
Strichmarkierung 107
O-Markierung 108
x-Markierung 109
y-Markierung 110
Strichmarkierung 111
Mündung P 112
Mündung R 113
Mündung S 114
Mündung B 115
Mündung A 116
Ausnehmung 117

Ausnehmung
118
Ausnehmung
119
Ausnehmung
120
Drittel
121
Ausnehmung
122
Gehäuse
123
Bohrung
124
Kappe
125
Schieberbahnteil
126
Durchbrechung
127
Wandungsabschnitt
128
Welle
129
Vierkantabschnitt
130
Teildrehschieber
131
Schieberbahnteil
132
Abstandsring
133
Durchbrechung
134
Ausnehmung
135
Gummiteile
136,136'
Nut
137,137'
Nut
138,138'
Nut
139,139'
Nut
140
Gehäuse
141
Schieberbahnteil
142
Schieberbahn
143
Schieber
144
Schieberfläche
145,145',145''
Ausnehmung
146,146'.146''

Ausnehmung
147,147',147''
Ausnehmung
148
Quernut
149
Finger
150
Kolbenstange
151
Längsnut
152
Gleitstein
153
Exzenterfinger
154
Stellhülse
155
Vierkantbohrung
156
Vierkantabschnitt
157
Verstellwelle
158
Deckfläche
159
Sechkantausnehmung
160
Feder
161
Ausnehmung
162
Markierung
163
Schieberventilsymbole
164
Dichtung
165
Zylinderkörper
166a
Beaufschlagungsraum
166b
Beaufschlagungsraum
167a
Beaufschlagungsraum
167b
Beaufschlagungsraum
168
Querstift-Bohrungs-Eingriff
169
T-Nut-Eingriff

**Patentansprüche**

1. Schieberventil (10) mit einem in einer einem Gehäuse (25;92;122;140) zugehörenden Schieberbahn (15,16;103;142) beweglichen, vermittels einer Betätigungseinrichtung (Kolben 53) innerhalb eines Funktions-Verstellbereiches in wenigstens zwei unterschiedliche Schaltstellungen einstellbaren Schieber (11,12;93;130;143), wobei der Schieber vermittels an ihm befindlicher Aussparungen (17,18;117-121;136-139';145-147'') in deren Zusammenwirken mit in die Schieberbahn mündenden, im Gehäuse angeordneten Druckmittelkanälen (22,23,24) diese Druckmittelkanäle in Abhängigkeit von den Schaltstellungen unterschiedlich miteinander verbunden bzw. voneinander trennt, dadurch gekennzeichnet, daß am Schieber (11,12;93;130;143) räumlich zueinander versetzt wenigstens zwei in wenigstens einer Schaltstellung unterschiedliche Funktions-Verstellbereiche vorgesehen sind, deren jeweils einer vermittels einer Verstellvorrichtung in die Schieberbahn (15,16;103;142) einstellbar ist.

2. Schieberventil nach Anspruch 1, dadurch gekennzeichnet, daß die wenigstens zwei Funktions-Verstellbereiche am Schieber (15,16;93;130) einander überlappend angeordnet sind.

3. Schieberventil nach Anspruch 1 oder 2, dadurch gekennzeichnet, daß die wenigstens zwei Funktions-Verstellbereiche zumindest annähernd rechtwinklig zur Bewegungsrichtung des Schiebers (143) in der Schieberbahn (142) zueinander versetzt am Schieber (143) angeordnet sind (Fig.19 und 20).

4. Schieberventil nach Anspruch 1 oder 2, dadurch gekennzeichnet, daß die wenigstens zwei Funktions-Verstellbereiche in Bewegungsrichtung des Schiebers (11,12;93;130) in der Schieberbahn (15,16;103) zueinander versetzt angeordnet sind.

5. Schieberventil nach Anspruch 3 oder 4, wobei die Betätigungseinrichtung eine Funktionskette von einem die Verstellbewegung des Schiebers (11,12;93;130) erzeugenden bzw. einleitenden Eingangsteil (53) zum Schieber selbst aufweist, dadurch gekennzeichnet, daß die Stellvorrichtung zum Einstellen des jeweils wirksamen Funktions-Verstellbereiches in die Funktionskette integriert angeordnet ist,

6. Schieberventil nach Anspruch 5, dadurch gekennzeichnet, daß in die Funktionskette die Stellung des Eingangsteils (53) relativ zum Schieber (11,12;93;130) entsprechend dessen Funktions-Verstellbereichen diskret verstellbar ist.

7. Schieberventil nach Anspruch 4 oder in Verbindung mit diesem nach Anspruch 5 oder 6, in der Ausbildung als Drehschieberventil mit ebener oder zylindrischer Schieberfläche (57;104) am Drehschieber (11,12;93;130), dadurch gekennzeichnet, daß die wenigstens zwei Funktions-Verstellbereiche sich über jeweils gleiche Winkelbeträge des Drehschiebers (11,12;93;130), jedoch innerhalb unterschiedlicher, einander ggf. überlappender Winkelbereiche am Drehschieber erstrecken.

8. Schieberventil nach Anspruch 7, in Ausbildung als 5/3-Wegeventil mit einem Drehschieber (93) mit einer ebenen Schieberfläche (104), dadurch gekennzeichnet, daß der Drehschieber (93) drei um jeweils gleiche Winkelbeträge von vorzugsweise 120° zueinander drehversetzt angeordnete Funktions-Verstellbereiche aufweist (Fig.13).

9. Schieberventil nach Anspruch 8, mit den genormten Leitungsanschlüssen P,A,B,R und S bzw. entsprechend 1,2,4,3 und 5, dadurch gekennzeichnet, daß die kreisförmige Schieberbahn (103) zentrisch eine Mündung (111) für einen P-Druck führenden Druckmittelkanal und innerhalb etwa eines Halbkreises zueinander zumindest annähernd symmetrisch zwei von den Halbkreisenden ausgehende, bogenartig gekrümmte Mündungen (112,113) für einen mit dem R- und einen mit dem S-Leitungsanschluß und zur Halbkreismitte an diese Mündungen (112,113) anschließend zwei weitere, etwa tortenstückartige, vor der zentrischen Mündung (111) endende Mündungen (114,115) für mit dem B- und dem A-Anschluß in Verbindung stehende Druckmittelkanäle aufweist, und daß die entsprechend kreisförmige Schieberfläche (104) des Drehschiebers (93) im Winkel von jeweils 120° zueinander versetzt drei von einer zentralen Ausnehmung (116) ausgehende, radialnutenartige Ausnehmungen (117,118,119) aufweist, von welchen zwei Ausnehmungen (117,118) relativ schmal ausgebildet sind und die dritte Ausnehmung (119) zentral einen, bezogen auf die beiden anderen Ausnehmungen (117,118), etwa doppelt weiten Ansatz aufweist, sich über etwa 2/3 ihrer Längserstreckung nach radialaußen erweitert und im restlichen, radialäußeren Drittel (120) ihrer Längserstreckung eine etwa den beiden anderen Ausnehmungen (117,118) entsprechende Weite aufweist, wobei sich jeweils zwischen den radialnutenartigen Ausnehmungen (117,118 und 119) drei etwa dreieckige Ausnehmungen (121) befinden (Fig.13).

10. Schieberventil nach Anspruch 7 oder 8, dadurch gekennzeichnet, daß der Drehschieber in zwei räumlich nebeneinander angeordnete, mit jeweils eigenen Schieberbahnen zusammenwirkende Teildrehschieber (11,12;130) aufgegliedert ist, die zueinander gleichartig ausgebildet und von einer gemeinsamen Betätigungseinrichtung (53) antreibbar sind.

11. Schieberventil nach Anspruch 10, dadurch gekennzeichnet, daß die beiden Teildrehschieber (130) beidseitig je eine Schieberfläche aufweisen und drehfest auf einer gemeinsamen Antriebswelle (128) angeordnet sind, wobei jedem Teildrehschieber (130) beidseitig je eine Schieberbahn (an Schieberbahnteil 125,131) zugeordnet ist (Fig.15).

12. Schieberventil nach Anspruch 11, in Ausbildung als 5/3-Wegeventil, dadurch gekenzeichnet, daß jeder Teildrehschieber (130) kreisscheibenartig ausgebildet ist und beidseitig über den Umfang verteilt je vier radiale, eine bis etwa zur radialen Mittelebene des Teildrehschiebers (130) reichende Tiefe aufweisende Nuten (136-139, 136'-139') aufweist, die radialinnen geschlossen, radialaußen offen enden, wobei die Nutanordnungen zu beiden Seiten gleich, aber zueinander drehversetzt sind, und daß jede Schieberbahn (am Schieberbahnteil 125,131) eine trapezartige Mündung eines Druckmittelkanals (Durchbrechung 126) aufweist, wobei alle Mündungen in den Schieberbahnen in Richtung parallel zur Antriebswelle (128) zueinander fluchtend angeordnet sind (Fig.16).

13. Schieberventil nach Anspruch 10, dadurch gekennzeichnet, daß die beiden Teildrehschieber (11,12,) seitlich zueinander versetzt mit zueinander parallelen Achsen (13,14) derart angeordnet sind, daß die Schieberbahnen (15,16) für beide Teildrehschieber (11,12) in einer Ebene liegen, und daß die Antriebswellen (42,43) beider Teildrehschieber (11,12) durch die Betätigungsvorrichtung (53) gleichartig und synchron drehbar sind (Fig.2).

14. Schieberventil nach Anspruch 10 oder 13, dadurch gekennzeichnet, daß jeder Teildrehschieber (11,12) kreisscheibenartig ausgebildet ist und auf seiner der Schieberbahn (15,16) zugewandten Seite (57) zwei auf einem Teilkreis befindliche, etwa halbkreisartige Teilringnuten (17,18) aufweist, die stirnseitig einerseits durch einen schmalen, schrägen Steg (58) und andererseits durch einen breiten Steg (59) voneinander getrennt sind, wobei die eine Teilringnut (18) einen zum breiten Steg (59) nach radialinnen versetzten, schräg endenden Nutfortsatz (60) aufweist, der sich über etwa die halbe Breite des breiten Steges (59) erstreckt, und daß die zueinander gleichartigen, beiden Schieberbahnen (15,16) jeweils drei Mündungen (61,62,63) von Druckmittelkanälen (22,23,24) aufweisen, die um jeweils ca. 90° zueinander versetzt angeordnet sind und von welchen zwei jeweils in Radial- und in Umfangsrichtung etwa gleiche Weite aufweisende Mündungen (62,63) ausschließlich mit den Teilringnuten (17,18) verbindbar und die dritte, in Radialrichtung nach innen verlängerte Mündung (61) zusätzlich mit dem Nutfortsatz (60) verbindbar angeordnet sind bzw. ist (Fig.6).

15. Schieberventil nach Anspruch 14, in Ausbildung als 5/3-Wegeventil mit den genormten Leitungsanschlüssen P,A,B,R und S bzw. entsprechend 1,2,4, 3 und 5, dadurch gekennzeichnet, daß in den Schieberbahnen (15,16) die beiden radialverlängerten Mündungen (61) symmetrisch auf einer Verbindungsgeraden (64) durch die Schieberflächen-Mittelpunkte liegen, daß die beiden zueinander benachbarten Mündungen (63,61) beider Schieberbahnen (15,16), deren nur eine (61) nach radialinnen verlängert ist, gemeinsam einem P-Druck führenden Druckmittelkanal (24), die beiden einander entferntesten Mündungen (61 und 63) beider Schieberbahnen (15,16) S-bzw. R-Druck führenden Druckmittelkanälen und die beiden restlichen, mittleren Mündungen (62) B- bzw. A-Druck führenden Druckmittelkanälen (22) zugehören (Fig.7).

16. Schieberventil nach Anspruch 3 oder in Verbindung mit diesem nach den Ansprüchen 5 oder 6, dadurch gekennzeichnet, daß der Schieber zylindrisch ausgebildet ist und an seiner Umfangsfläche zumindest zwei in Umfangsrichtung zueinander versetzte, teilzylindrische Funktions-Verstellbereiche aufweist, daß die Schieberbahn entsprechen teilzylindrisch ausgebildet ist und daß der Schieber vermittels der Betätigungseinrichtung zum Einstellen der je Funktions-Verstellbereich wenigstens zwei unterschiedlichen Schaltstellungen relativ zur Schieberbahn axial verschieblich und vermittels der Stellvorrichtung zum Einstellen des jeweils wirksamen Funktions-Verstellbereiches um seine Achse drehbar ist.

17. Schieberventil nach Anspruch 3 oder in Verbindung mit diesem nach den Ansprüchen 5 und 6, wobei sich in der ebenen Schieberbahn (142) in einer Geraden zueinander versetzt mehrere Mündungen von Druckmittelkanälen befinden und wobei der Schieber (143) vermittels der Betätigungsvorrichtung (53) parallel zu dieser Geraden verstellbar ist, dadurch gekennzeichnet, daß der Schieber (143) rechtwinklig zu der Geraden versetzt nebeneinander wenigstens zwei Funktions-Verstellbereiche aufweist und vermittels der Stellvorrichtung rechtwinklig zu der Geraden verstellbar ist (Fig.19,20).

18. Schieberventil nach Anspruch 17, in Ausbildung als 5/3-Wegeventil mit den genormten Anschlüssen P,A,B, R und S bzw. entsprechend 1,2,4,3 und 5, dadurch gekennzeichnet, daß sich in der Schieberbahn (142) in einer Reihe mit zumindest annähernd gleichen Abständen zueinander Mündungen für R-,A-,P-,B- und S-Druck führende Druckmittelkanäle befinden und daß der Schieber (143) drei Funktions-Verstellbereiche aufweist, in deren jedem die Schieberfläche (144) in Reihe zueinander drei Ausnehmungen (145,146,147;145',146',147';145'',146'',147'') aufweist, wobei der Abstand der voneinander entferntesten Ausnehmungs-Enden jeweils gleich ist und wobei in einer ersten Reihe die Ausnehmungen (145',146',147') gleiche Länge und einen etwa der Hälfte ihrer Länge entsprechenden Abstand voneinander aufweisen, in einer zweiten Reihe die beiden seitlichen Ausnehmungen (145,147) unter Verkürzen der Abstände verlängert sind und in der dritten Reihe die mittlere Ausnehmung (146'') bei ebenfalls verkürzten Abständen verlängert ist (Fig.20).

19. Schieberventil nach einem oder mehreren der vorstehenden Ansprüche, dadurch gekennzeichnet, daß die wenigstens eine Schieberbahn (15,16,103;142) sich an einem in das Gehäuse (25;92;122;140) fest einsetzbaren Schieberbahnteil (20;94;125,131;141) befindet.

20. Schieberventil nach einem der Ansprüche 13-15 in Verbindung mit Anspruch 19, dadurch gekennzeichnet, daß die beiden Schieberbahnen (15,16) sich an getrennten, in das Gehäuse (25;122) fest einsetzbaren Schieberbahnteilen (125,131) befindet.

21. Schieberventil nach Anspruch 19 oder 20, dadurch gekennzeichnet, daß das Schieberbahnteil (20;94;141) von Druckmittelkanälen (22-24) durchsetzt ist, welche in der Schieberbahn liegende Mündungen (61-63;111-114) abgedichtet mit im Gehäuse befindlichen, an Leitungsanschlüssen (1-5 bzw. P,A,R,B,S) endenden Druckmittelkanälen (28) verbinden.

22. Schieberventil nach einem oder mehreren der Ansprüche 19-21, dadurch gekennzeichnet, daß sowohl der Schieber (11,12;93;130;143) wie das Schieberbahnteil (20;94;125,131;141) bzw. die Schieberbahnteile zumindest in ihrem aneinander aufliegenden Bereichen aus einem Keramikwerkstoff bestehen.

23. Schieberventil nach Anspruch 22, dadurch gekennzeichnet, daß schieberbahnteilabgewandt am Schieber (11,12;93) unter Federbelastung eine im Gehäuse (25;92) in bezug auf die Verstellbewegungen des Schiebers festgehaltene Druckplatte (32;97) anliegt.

24. Schieberventil nach Anspruch 22, dadurch gekennzeichnet, daß die Druckplatte (32;97) aus Keramikwerkstoff besteht.

25. Schieberventil nach Anspruch 23 oder 24, dadurch gekennzeichnet, daß die Druckplatte (32) in Entfernungsrichtung vom Schieber (11,12) gegen eine Ringschulter (33) des Ventilgehäuses (25) abgefangen ist und daß ein ein Schieberbahnteil (20), einen auf diesem aufliegenden Schieber (11,12) und die Druckplatte (32) umfassender Stapel unter Zwischenlage wenigstens eines die Federbelastung bewirkenden O-Ringes (31) in das Ventilgehäuse (25) eingespannt ist (Fig.2).

26. Schieberventil nach Anspruch 25, dadurch gekennzeichnet, daß beidseitig des Stapels je ein O-Ring (31,83) angeordnet ist, dessen einer O-Ring (83) sich im Bereich der Ringschulter (33) befindet (Fig.8).

27. Schieberventil nach einem oder mehreren der Ansprüche 24 bis 26, dadurch gekennzeichnet, daß die Druckplatte (32) ein Axialwälzlager (82) beinhaltet.

28. Schieberventil nach Anspruch 27, dadurch gekennzeichnet, daß die Druckplatte (32) ein radialgerichtete Nadeln aufweisendes Nadel-Axialwälzlager (82) mit an den Nadeln schieberseitig anliegendem, metallischem Laufring umfaßt.

29. Schieberventil nach Anspruch 5, 6 oder 7, in Ausbildung als Drehschieberventil mit ebener Schieberfläche, dadurch gekennzeichnet, daß der Drehschieber (11,12;93) auf seiner der Schieberbahn (15,16;103) abgewandten Seite drehbewegungsübertragend mit einer im Gehäuse (25;92) gelagerten Antriebswelle (42,43;98) gekoppelt ist, welche ein Zahnrad (45,46;99) trägt, das willkürlich auskuppel- und drehverstellbar mit einer mit dem Eingangsteil (53) verbundenen Zahnstange (52) zusammenwirkt.

30. Schieberventil nach den Ansprüchen 10 und 29, dadurch gekennzeichnet, daß die beiden Teildrehschieber (11,12) über gesonderte Antriebswellen (42,43) und Zahnräder (45,46) gesondert auskuppel- und drehverstellbar mit einer gemeinsamen Zahnstange (52) koppelbar sind sind (Figuren 2 und 4).

31. Schieberventil nach Anspruch 30, dadurch gekennzeichnet, daß wenigstens eines der beiden Zahnräder (45,46) im von der Zahnstange (52) ausgerasteten Zustand verrastbar ist.

32. Schieberventil nach Anspruch 29, 30 oder 31, dadurch gekennzeichnet, daß das Zahnrad (45,46;99) gegen Federkraft (48;98') axialverschieblich gehaltert ist.

33. Schieberventil nach Anspruch 29 oder 30, dadurch gekennzeichnet, daß die Zahnstange (90) gegen Federkraft (91) seitlich auslenkbar gelagert ist (Fig.11).

34. Schieberventil nach Anspruch 29 oder 30 oder 31, dadurch gekennzeichnet, daß die Zahnstange (86,87) um eine zu ihrer Längsrichtung parallele Drehachse drehbar gelagert ist und nur in bestimmten Drehlagen mit dem Zahnrad bzw. den Zahnrädern (45,46) in Eingriff steht (Fig.9 und 10).

35. Schieberventil nach Anspruch 34, dadurch gekennzeichnet, daß die Zahnstange einen zylindrischen Kern (86) aufweist, um dessen Achse sie drehbar ist, und daß die Verzahnung (87) vom Kern (86) nur innerhalb eines bestimmten Winkelbereiches um die Achse radial auskragt, innerhalb eines anderen Winkelbereiches dagegen keine Verzahnung vorgesehen ist (Fig.9 und 10).

36. Schieberventil nach einem oder mehreren der Ansprüche 29 bis 35, dadurch gekennzeichnet, daß die Zahnstange (52;86;90) an wenigstens einem ihrer Enden an einem zahnstangenabgewandt druckmittelbeaufschlagbaren Kolben (53) anliegt.

37. Schieberventil nach Anspruch 36, dadurch gekennzeichnet, daß der Kolben (53) zahnstangenabgewandt von einer Druckfeder (76) belastbar ist, deren kolbenabgewandtes Widerlager (Kulissenhülse 71) axial verstellbar ist und deren kolbenseitiges Ende durch einen mit dem Widerlager verstellbaren Zuganker (74) abfangbar ist.

38. Schieberventil nach Anspruch 37, dadurch gekennzeichnet, daß beidendig zur Zahnstange (52;86;90) je ein Kolben (53) und eine Druckfeder (76) angeordnet sind.

39. Schieberventil nach Anspruch 38, in Ausbildung als ein Dreistellungsventil, dadurch gekennzeichnet, daß jedes Widerlager (Kulissenhülse 71) mitsamt dem Zuganker (74) in drei Stellungen einstellbar ist, welche den Stellungen der Zahnstange (52;86;90) in den drei Ventilstellungen entsprechen.

40. Schieberventil nach Anspruch 39, dadurch gekennzeichnet, daß die Druckfeder (76), das Widerlager (Kulissenhülse 71) und der Zuganker (74) mit einem Gehäuse (69) zu einer Federbaueinheit (54) zusammengefaßt sind, wobei das rohrartige Gehäuse (69) an den Beaufschlagungszylinder des Kolbens (53) dicht anflanschbar ist, in dem Gehäuse (69) abgedichtet verschieb- und drehbar das als Kulissenhülse (71) ausgebildete Widerlager angeordnet ist, zwischen das Gehäuse (69) und die Kulissenhülse (71) eine in drei unterschiedlichen Axial- und diesen zugeordneten Drehlagen zwischen Gehäuse (69) und Kulissenhülse (71) einrastbare Rastierung vorgesehen ist und in der Kulissenhülse (71) abgedichtet verschieblich und in Verschieberichtung zum Kolben (53) durch eine Ringschulter (77) abfangbar eine dem Zuganker (74) zugehörende Stange gelagert ist, die mit einem am kolbenseitigen Ende einen dieses Ende der Druckfeder (76) abfangenden Federteller (75) trägt (Fig.21).

41. Schieberventil nach Anspruch 40, dadurch gekennzeichnet, daß die Federbaueinheit (54) ein Schauzeichen aufweist, das nur bei entgegen der Kraft der Feder (76) unter Entfernen von der Ringschulter (77) verschobener Stange (Ansatz 78) schaltet (Fig.21).

42. Schieberventil nach Anspruch 41, dadurch gekennzeichnet, daß die Kulissenhülse (71) am der Druckfeder (76) abgewandten Ende ein außerhalb des Gehäuses (69) befindliches Handrad (72) trägt, daß das Handrad (72) in einem im wesentlichen zylindrischen Abschnitt (79) ein Sichtfenster aufweist und daß die Stange mit einem verstärkten, am federtellerabgewandten Ende befindlichen Ansatz nur in ihrer entgegen der Kraft der Feder (76) verschobenen Lage hinter das Sichtfenster gelangt.

**43.** Schieberventil nach den Ansprüchen 30 und 36, dadurch gekennzeichnet, daß zwei getrennte, auf gegenüberliegenden Seiten der Zahnräder (45,46) mit diesen in Eingriff stehende, zueinander parallele Zahnstangen (52a,52b) vorgesehen sind, welche an ihren entgegengesetzten Enden mit jeweils einem von zwei Kolben (53a,53b) gekoppelt sind, wobei die beiden Kolben (53a,53b) gemeinsam, jedoch in entgegengesetzter Richtung wirkend ddruckmittelbeaufschlagbar sind (Fig.23).

**44.** Schieberventil nach Anspruch 30, 36 oder 43, dadurch gekennzeichnet, daß das Gehäuse (25) des Schieberventils (10) etwa in der Ebene der Zahnstange (52) bzw. Zahnstangen (52a,52b) in einen Gehäuse-Grundkörper (25a) und einen Gehäusedeckelteil (25b) geteilt ausgebildet ist, die fest, jedoch lösbar miteinander verbunden sind, wobei ggf. vorhandene Zylinderkörper (165) für den bzw. die Kolben (53, 53a, 53b) dem Gehäusedeckelteil (25b) zugeordnet sind (Fig.22).

**45.** Schieberventil nach Anspruch 22 in Verbindung mit einem der Ansprüche 8, 9 oder 14, dadurch gekennzeichnet, daß der Drehschieber (11,12;93) mehrteilig mit einer aus einen Keramikwerkstoff bestehenden, auf dem Schieberbahnteil (20;20a,20b;94) aufliegenden Kreisscheibe (11a,12a) mit achsparallelen Durchbrechungen (17a,18a) und einer auf dieser unter Zwischenordnen einer axial elastischen, die Mündungen der Durchbrechungen (17a,18a) umgebenden Dichtung (164) aufliegenden Stützscheibe (11b,12b) aus nichtkeramischem Werkstoff ausgebildet ist, wobei die Stützscheibe (116,126) seitens der Kreisscheibe (11a,12a) mit den Durchbrechungen (17a,18a) fluchtende Teilringnuten (17b,18b) aufweist und andererseits über ein Drehlager (82) gegen das Gehäuse (25) axial abgestützt und mit einem Drehantrieb gekoppelt ist (Fig.22).

a 3er Fkt.

b 4er Fkt.

c 1er Fkt.

d 2er Fkt.

e 5er Fkt.

f 6er Fkt.

g 7er Fkt.

h 8er Fkt.

i 9er Fkt.

Fig.1

Fig.2

Fig.3

EP 0 514 838 A2

Fig.4

Fig.5

Fig.6

28

Fig.7

EP 0 514 838 A2

Fig.8

Fig.9

Fig.10

Fig.11

Fig.12a

Fig.12b

Fig.13

Fig. 14

EP 0 514 838 A2

EP 0 514 838 A2

Fig.15

Fig.16a

Fig.16b

Fig.17

Fig.18

Fig.19

Fig.20

Fig.21

Fig.22

Fig.23